(19) Europäisches Patentamt
European Patent Office
Office européen des brevets

(11) EP 2 271 697 B1

(12) **EUROPÄISCHE PATENTSCHRIFT**

(45) Veröffentlichungstag und Bekanntmachung des Hinweises auf die Patenterteilung:
**09.07.2014 Patentblatt 2014/28**

(21) Anmeldenummer: **09735325.4**

(22) Anmeldetag: **23.04.2009**

(51) Int Cl.:
***C08G 65/26*** *(2006.01)*

(86) Internationale Anmeldenummer:
**PCT/EP2009/054897**

(87) Internationale Veröffentlichungsnummer:
**WO 2009/130281 (29.10.2009 Gazette 2009/44)**

(54) **ALKOHOLALKOXYLATE, DIESE ENTHALTENDE MITTEL UND VERWENDUNG DER ALKOHOLALKOXYLATE ALS ADJUVANS FÜR DEN AGROCHEMISCHEN BEREICH**

ALCOHOL ALKOXYLATES, MEDIA CONTAINING THESE AND UTILISATION OF ALCOHOL ALKOXYLATES AS ADJUVANTS FOR THE AGROCHEMICAL SECTOR

ALCOXYLATES D'ALCOOL, MILIEU LES COMPRENANT ET UTILISATION DES ALCOXYLATES D'ALCOOL EN TANT QU'ADJUVANTS DANS LE DOMAINE AGROCHIMIQUE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **24.04.2008 EP 08155135**

(43) Veröffentlichungstag der Anmeldung:
**12.01.2011 Patentblatt 2011/02**

(73) Patentinhaber: **BASF SE**
**67056 Ludwigshafen (DE)**

(72) Erfinder:
- **STEINBRENNER, Ulrich**
  **67435 Neustadt (DE)**
- **STÖSSER, Michael**
  **67141 Neuhofen (DE)**
- **BERGHAUS, Rainer**
  **67346 Speyer (DE)**
- **STRATHMANN, Siegfried**
  **67117 Limburgerhof (DE)**

(56) Entgegenhaltungen:
**WO-A-03/090531**
**DE-A1- 10 017 197**
**US-A1- 2007 281 860**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 271 697 B1

Printed by Jouve, 75001 PARIS (FR)

## Beschreibung

Die vorliegende Erfindung betrifft bestimmte Alkoholalkoxylate vom amphiphilen Typ, agrochemische Mittel, die diese enthalten, und die Verwendung der Alkoholalkoxylate als wirkungsverbesserndes Adjuvans im agrochemischen Bereich und insbesondere im Bereich des Pflanzenschutzes.

Neben der Optimierung der Wirkstoffeigenschaften kommt mit Blick auf eine industrielle Produktion und Anwendung von Wirkstoffen der Entwicklung eines effizienten Mittels besondere Bedeutung zu. Durch eine sachgerechte Formulierung des oder der Wirkstoffe muß ein optimaler Ausgleich zwischen teils gegenläufigen Eigenschaften wie der biologischen Wirksamkeit, der Toxikologie, möglichen Einflüssen auf die Umwelt und den Kosten gefunden werden. Darüber hinaus bestimmt die Formulierung zu einem erheblichen Maß die Haltbarkeit und den Anwendungskomfort eines Mittels.

Von besonderer Bedeutung für die Wirksamkeit eines agrochemischen Mittels ist die effektive Aufnahme des Wirkstoffs durch die Pflanze. Erfolgt diese Aufnahme über das Blatt, so stellt sich diese als komplexer Transportvorgang dar, bei dem die Wirkstoffmasse, beispielsweise ein Herbizid, zunächst in die wachsartige Cuticula des Blatts eindringen und anschließend über die Cuticula in die unterliegenden Gewebe an den eigentlichen Wirkort diffundieren muss.

Allgemein bekannt und landwirtschaftliche Praxis ist es, zwecks verbesserter Wirksamkeit Formulierungen bestimmte Hilfsstoffe zuzusetzen. Vorteilhafterweise können dadurch die Wirkstoffmengen in der Formulierung bei gleichbleibender Aktivität verringert werden, wodurch Kosten minimiert und gegebenenfalls bestehende gesetzliche Regelungen eingehalten werden können. Auch gelingt es in Einzelfällen, das Wirkstoffspektrum zu vergrößern, indem Pflanzen, die ohne Zusatz nur in unzureichender Weise mit einem bestimmten Wirkstoff behandelt werden konnten, durch Zusatz bestimmter Hilfsstoffe einer entsprechenden Behandlung zugänglich sind. Weiterhin kann die Leistungsfähigkeit unter ungünstigen Umweltbedingungen in Einzelfällen durch eine geeignete Formulierung erhöht werden. Mithin können auch Unverträglichkeiten verschiedener Wirkstoffe in einer Formulierung vermieden werden.

Derartige Hilfsstoffe werden gelegentlich auch als Adjuvantien bezeichnet. Es handelt sich oftmals um oberflächenaktive oder salzartige Verbindungen. Je nach Wirkungsweise können z.B. Modifikatoren, Aktuatoren, Dünger und pH-Puffer unterschieden werden. Modifikatoren beeinflussen Benetzung, Haftung und Spreitung einer Formulierung. Aktuatoren brechen die wachsartige Pflanzencuticula auf und verbessern die Penetration des Wirkstoffs in die Cuticula sowohl kurzfristig (im Minutenbereich) als auch langfristig (im Stundenbereich). Dünger wie Ammoniumsulfat, Ammoniumnitrat oder Harnstoff verbessern die Absorption und Löslichkeit des Wirkstoffs, und sie können antagonistische Verhaltensweisen von Wirkstoffen verringern. pH-Puffer werden herkömmlicherweise zur optimalen Einstellung des pH-Werts der Formulierung verwendet.

Im Hinblick auf die Aufnahme des Wirkstoffs in das Blatt können oberflächenaktive Substanzen als Modifikatoren und Aktuatoren wirken. Allgemein wird angenommen, dass geeignete oberflächenaktive Substanzen die effektive Kontaktfläche von Flüssigkeiten auf Blättern durch eine Verminderung der Oberflächenspannung erhöhen können. Darüber hinaus können bestimmte oberflächenaktive Substanzen die epicuticulären Wachse auflösen oder aufbrechen, was die Absorption des Wirkstoffs erleichtert. Ferner können einige oberflächenaktive Substanzen auch die Löslichkeit von Wirkstoffen in Formulierungen verbessern und damit eine Kristallbildung vermeiden oder diese zumindest hinauszögern. Schließlich können sie in bestimmten Fällen auch die Absorption von Wirkstoffen beeinflussen, indem sie Feuchtigkeit zurückhalten.

Adjuvantien vom oberflächenaktiven Typ werden in vielfältiger Weise für agrochemische Anwendungen genutzt. Man kann diese in anionische, kationische, nicht-ionische oder amphotere Stoffgruppen unterteilen.

Traditionell werden Öle auf Petroleum-Basis als aktivierende Adjuvantien verwendet. In jüngster Vergangenheit setzte man auch Samenextrakte, natürliche Öle und deren Derivate, beispielsweise aus Sojabohnen, Sonnenblumen und Kokosnuss, ein.

Bei synthetischen oberflächenaktiven Substanzen, die üblicherweise als Aktuatoren verwendet werden, handelt es sich unter anderem um Polyoxyethylen-Kondensate mit Alkoholen, Alkylphenolen oder Alkylaminen, welche HLB-Werte im Bereich von 8 bis 13 aufweisen. In diesem Sinne nennt die WO 00/42847 beispielsweise den Einsatz bestimmter linearer Alkoholalkoxylate, um die Wirksamkeit agrochemischer Biozidformulierungen zu steigern.

Das Spektrum von Alkoholalkoxylaten ist jedoch vielfältig. Als Tenside finden sie vornehmlich Anwendung in Wasch- und Reinigungsmitteln, in der metallverarbeitenden Industrie, bei der Herstellung und Verarbeitung von Textilien, in der Leder-, Papier-, Druck-, Galvano- und Fotoindustrie, bei der Wasserbehandlung, in pharmazeutischen, tierarzneilichen und den Pflanzenschutz betreffenden Formulierungen, oder in der Kunststoff herstellenden und Kunststoff verarbeitenden Industrie. Insbesondere die Strukturen des Alkoholteils und in bestimmten Fällen auch des Alkoxylatteils nehmen Einfluss auf die Eigenschaften der Alkoxylate, so dass bei den vorstehend genannten Anwendungen verschiedene technische Effekte zum Tragen kommen können. Hierzu gehören das Benetzen, das Spreiten, die Penetration, das Anhaften, die Filmbildung, das Verbessern von Verträglichkeiten, die Driftkontrolle und das Entschäumen. Beispielsweise beschreibt die WO 01/77276 (US 2003/092587 bzw. DE 100 17 197) bestimmte Alkoholalkoxylate als schaumarme und schaumdämpfende Tenside. Hierzu gehören Alkoholalkoxylate mit terminalem Pentylenoxidblock, beispielsweise

n-Butyldiglykol + 10 EO + 6 PeO oder n-Hexylgylkol + 12 EO + 4 PeO, oder Alkoholalkoxylate mit proximalem Pentylenoxidblock, beispielsweise i-Decanol + 1,5 Pentenoxid + 6 EO + 3 PO oder i-Decanol + 1,5 Pentenoxid + 8 EO + 2 BO. Eine Verwendung dieser Alkoholalkoxylate als Adjuvans für den agrochemischen Bereich ist nicht beschrieben.

WO 03/090531 (US 2005/170968) beschreibt die Verwendung von Alkoxylaten bestimmter verzweigter Alkohole, zu denen insbesondere 2-Propylheptanol, C13-Oxoalkohole und C10-Oxoalkohole gehören, als Adjuvans für den agrochemischen Bereich. Ähnliche Alkohololkoxylate werden in der WO 2005/015998 speziell als Adjuvans für fungizide Benzamidoxim-Derivate vorgeschlagen. WO 00/35278 betrifft agrochemische Formulierungen auf Basis von PO/EO-Blockcopolymeren des 2-Ethylhexanols. WO 2005/084435 (US 2007/281860) beschreibt Suspensionskonzentrate von Pflanzenschutzwirkstoffen auf Ölbasis, die eines der beiden endgruppenverschlossenen Alkoholblockalkoxylate $CH_3\text{-}(CH_2)_{10}\text{-}O\text{-}(EO)_6\text{-}(BO)_2\text{-}CH_3$ oder $CH_3\text{-}(CH_2)_8\text{-}O\text{-}(EO)_8\text{-}(BO)_2\text{-}CH_3$ als Penetrationsförderer enthalten. Die endruppenverschlossenen Alkoholblockalkoxylate sollen eine bessere Wirkung besitzen als vergleichbare Alkoxylate ohne Endgruppenverschluss.

In jenen Alkoholalkoxylaten folgt auf den hydrophoben langkettigen Alkoholteil mit wenigstens 8 Kohlenstoffatomen ein hydrophiler, aus EO und/oder PO aufgebauter Alkoxylatteil.

Der vorliegenden Erfindung liegt die Aufgabe zugrunde, weitere für den agrochemischen Bereich brauchbare Adjuvantien zur Verfügung zu stellen.

Diese Aufgabe löst die vorliegende Erfindung mit Alkoholalkoxylaten, die einen mindestens 15 Kohlenstoffatome, mindestens 2 Verzweigungen und 0,1 bis 0,3 Verzweigungen pro Kohlenstoffatom aufweisenden hydrophoben Teil aufweisen, deren Verwendung als Adjuvans und agrochemischen Mitteln, die diese Alkoxylate enthalten.

Gegenstand der vorliegenden Erfindung sind
Mittel, umfassend

(a) wenigstens einen Wirkstoff zur Pflanzenbehandlung; und
(b) wenigstens einen alkoxylierten Alkohol der Formel (Ib)

$$R\text{-}O\text{-}(C_4H_8O)_x\text{-}[(C_2H_4O)_p\text{-}(C_3H_6O)_q]_{co}\text{-}H \qquad \text{(Ib)}$$

worin

R für einen aliphatischen linearen oder verzweigten Rest mit 1 bis 30 Kohlenstoffatomen steht;
x für einen Wert von 0 bis 100 steht;
x größer Null ist;

die Summe aus dem Wert von (4 • x) und der Anzahl der Kohlenstoffatome in R 15 bis 60 beträgt;

p für einen Wert von 0 bis 100 steht;
q für einen Wert von 0 bis 100 steht;

die Summe aus p und q größer Null ist,
wobei der Rest $R\text{-}O\text{-}(C_4H_8O)_x\text{-}$ 2 bis 12 Verzweigungen insgesamt und 0,1 bis 0,3 Verzweigungen pro C-Atom aufweist.

Gegenstand der vorliegenden Erfindung sind des WeiterenMittel, umfassend

(a) wenigstens einen Wirkstoff zur Pflanzenbehandlung; und
(b) wenigstens einen alkoxylierten Alkohol der Formel (IIb)

$$R\text{-}O\text{-}(C_{n1}H_{2n1}O)_o\text{-}[(C_2H_4O)_p\text{-}(C_3H_6O)_q]_{co}\text{-}(C_4H_8O)_x\text{-}H \qquad \text{(IIb)}$$

worin

R für einen aliphatischen linearen oder verzweigten Rest mit 1 bis 30 Kohlenstoffatomen steht;
n1 für 2 oder 3 steht;
o für 0, 1, 2 oder 3 steht;
x für einen Wert von 0 bis 100 steht;
x größer Null ist;

der Wert von (4 • x) 15 bis 60 beträgt;

p für einen Wert von 0 bis 100 steht;
q für einen Wert von 0 bis 100 steht;

die Summe aus p und q größer Null ist,
wobei der Rest $-(C_4H_8O)_x-H$ 2 bis 12 Verzweigungen insgesamt und 0,1 bis 0,3 Verzweigungen pro C-Atom aufweist.

Besondere Vorteile ergeben sich aus dem Zusatz der erfindungsgemäßen Alkoholalkoxylate zu Mitteln, die Wirkstoffe zur Pflanzenbehandlung enthalten.

Die in den erfindungsgemäßen Mitteln enthaltenen Alkoholalkoxylate weisen vor allem adjuvante, insbesondere wirkungsfördernde Eigenschaften auf. So ermöglicht der Zusatz derartiger Alkoxylate eine beschleunigte Aufnahme von Wirkstoffen durch eine mit dem Wirkstoff zu behandelnde Pflanze. Aus der adjuvanten Wirkung leiten sich insbesondere folgende Aspekte bei der Behandlung von Pflanzen mit einem oder mehreren Wirkstoffen ab:

- vergleichsweise höhere Wirksamkeit des Wirkstoffs bei gegebener Aufwandmenge;
- vergleichsweise geringere Aufwandmenge bei gegebener Wirkung;
- vergleichsweise stärkere Aufnahme des Wirkstoffs durch die Pflanze, insbesondere über das Blatt, und damit Vorteile im Nachlaufverfahren, insbesondere bei der Sprühbehandlung von Pflanzen.

Demnach betrifft die vorliegende Erfindung auch die Verwendung eines alkoxylierten Alkohols der Formel (Ib) oder Formel (IIb) als Adjuvans bei der Behandlung von Pflanzen.

Die erfindungsgemäße Verwendung ist insbesondere auf den Pflanzenanbau, die Landwirtschaft und den Gartenbau gerichtet. Insbesondere dient sie zur Kontrolle unerwünschten Pflanzenwachstums.

Demnach betrifft die vorliegende Erfindung auch obigen Verwendungszwecken entsprechende Verfahren zur Behandlung von Pflanzen, wobei man eine geeignete Menge an erfindungsgemäßem Alkoholalkoxylat appliziert.

Besondere Vorteile werden insbesondere im Anbau von Allium cepa, Ananas comosus, Arachis hypogaea, Asparagus officinalis, Avena sativa, Beta vulgaris spec. altissima, Beta vulgaris spec. rapa, Brassica napus var. napus, Brassica napus var. napobrassica, Brassica rapa var. silvestris, Brassica aleracea, Brassica nigra, Camellia sinensis, Carthamus tinctorius, Carya illinoinensis, Citrus limon, Citrus sinensis, Coffea arabica (Coffea canephora, Coffea liberica), Cucumis sativus, Cynodon dactylon, Daucus carota, Elaeis guineensis, Fragaria vesca, Glycine max, Gossypium hirsutum, (Gossypium arboreum, Gossypium herbaceum, Gossypium vitifolium), Helianthus annuus, Hevea brasiliensis, Hordeum vulgare, Humulus lupulus, Ipomoea batatas, Juglans regia, Lens culinaris, Linum usitatissimum, Lycopersicon lycopersicum, Malus spec., Manihot esculenta, Medicago sativa, Musa spec., Nicotiana tabacum (N.rustica), Olea europaea, Oryza sativa, Phaseolus lunatus, Phaseolus vulgaris, Picea abies, Pinus spec., Pistacia vera, Pisum sativum, Prunus avium, Prunus persica, Pyrus communis, Ribes sylvestre, Ricinus communis, Saccharum officinarum, Secale cereale, Sinapsis alba, Solanum tuberosum, Sorghum bicolor (s. vulgare), Theobroma cacao, Trifolium pratense, Triticale, Triticum aestivum, Triticum durum, Vicia faba, Vitis vinifera, Zea mays erzielt.

Besondere Wirkungen erzielen die erfindungsgemäßen Mittel im Anbau von Allium cepa, Hordeum vulgare, Triticum aestivum und Triticum durum.

Darüber hinaus können die erfindungsgemäß zu verwendenden Alkoxylate auch in Kulturen, die gegen die Wirkung von Pestiziden, insbesondere Herbiziden, tolerant sind, verwendet werden. Derartige Kulturen können beispielsweise durch Züchtung und auch gentechnische Methoden erhalten werden.

Der Alkoholteil der erfindungsgemäß zu verwendenden Alkoholalkoxylate basiert in der Regel auf an sich bekannten Alkoholen oder Alkoholgemischen mit 1 bis 30 Kohlenstoffatomen. Hierzu gehören einerseits kurzkettige mit 1 bis 7 und insbesondere mit entweder 1 bis 4 oder 5 bis 7 Kohlenstoffatomen, andererseits langkettige mit 8 bis 30, vorzugsweise 8 bis 20 und insbesondere 9 bis 18 Kohlenstoffatomen. Zweckmäßiger weise handelt es sich um monofunktionelle Alkohole.

In der Formel (Ib) oder (IIb) steht R für den aliphatischen linearen oder verzweigten Rest eines Alkohols R-OH, der bei der Herstellung der Alkoholalkoxylate als Starteralkohol eingesetzt werden kann. Bevorzugt steht R für $C_1$-$C_{30}$-Alkyl oder $C_1$-$C_{30}$-Alkenyl.

Falls der Alkohol ein kurzkettiger alipahtischer ist, steht R in Formel (Ib) oder (IIb) insbesondere für kurzkettiges Alkyl, wie Methyl, Ethyl, n-Propyl, iso-Propyl, n-Butyl, 2-Butyl, iso-Butyl or tert-Butyl, n-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, 2-Ethylpropyl, n-Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 3-Ethylbutyl, 1,1,2-Trimethylpropyl, 1,2,2-Trimethylpropyl, 1-Ethyl-1-methylpropyl,1-Ethyl-2-methylpropyl, 2-Ethyl-1-methylpropyl, 2-Ethyl-2-methylpropyl, n-Heptyl, 1-Methylhexyl, 2-Methylhexyl, 3-Methylhexyl, 4-Methylhexyl, 5-Methylhexyl, 1,1-Dimethylpentyl, 1,2-Dimethylpentyl, 1,3-Dimethylpentyl, 1,4-Dimethylpentyl, 2,2-Dimethylpentyl, 2,3-Dimethylpentyl, 2,4-Dimethylpentyl, 3,3-Dimethylpentyl, 3,4-Dimethylpentyl, 4,4-Dimethylpentyl, 1-Ethylpentyl, 2-Ethylpentyl, 3-Ethylpentyl, 4-Ethylpentyl, 1,1,2-Trimethylbutyl, 1,1,3-Trimethylbutyl, 1,2,2-Trimethylbutyl, 1,2,3-Trimethylbutyl, 1,3,3-Trimethylbutyl, 1-Ethyl-1-methylbutyl,1-Ethyl-2-methylbutyl, 1-Ethyl-3-methylbutyl, 2-Ethyl-1-methylbutyl, 2-Ethyl-2-methylbutyl, 2-Ethyl-3-methylbutyl, 3-Ethyl-1-methylbutyl, 3-Ethyl-2-methylbutyl, 3-Ethyl-3-methylbutyl, 1-Propylbutyl, 2-Propylbutyl, 3-Propylbutyl, 1-Butylpropyl, 2-Butylpropyl, 1-Propyl-1-methylpropyl, 1-Propyl-2-methylpropyl, 2-Propyl-1-methylpropyl, 2-Propyl-2-methylpropyl, 1,1-Diethylpropyl, 1,2-Diethylpropyl, oder 2,1-Diethylpropyl, wobei auch Gemische aus zwei oder mehr Alkoholalkoxylaten, in denen R verschieden ist, geeignet sein können.

Falls der Alkohol ein langkettiger alipahtischer ist, steht R in Formel (Ib) oder (IIb) insbesondere für langkettiges Alkyl, wie Octanyl, 2-Ethylhexanyl, Nonanyl, Decanyl, Undecanyl, Dodecanyl, 2-Butyloctanyl, Tridecanyl, Tetradecanyl, Pentadecanyl, Isooctanyl, Iso-nonanyl, Iso-decanyl, Iso-undecanyl, Iso-dodecanyl, Iso-tridecanyl, Isotetradecanyl, Isopentadecanyl, 2-Propylheptanyl, Hexadecanyl, Heptadecanyl, Octadecanyl, wobei auch Gemische aus zwei oder mehr Alkoholalkoxylaten, in denen R verschieden ist, geeignet sein können.

Der Alkoholteil der zu verwendenden Alkoxylate kann geradkettig oder verzweigt sein. Ist er verzweigt, so weist einer besonderen Ausführungsform zufolge die Hauptkette des Alkoholteils in der Regel 1 bis 4 Verzweigungen auf, wobei auch Alkohole mit höherem oder niedrigerem Verzweigungsgrad im Gemisch mit weiteren Alkoholalkoxylaten verwendet werden können, solange die mittlere Zahl der Verzweigungen des Gemisches im angegebenen Bereich liegt.

Im Allgemeinen weisen die Verzweigungen unabhängig voneinander 1 bis 10, vorzugsweise 1 bis 6 und insbesondere 1 bis 4 Kohlenstoffatome auf. Besondere Verzweigungen sind Methyl-, Ethyl-, n-Propyl- oder iso-Propyl-Gruppen.

Zu den linearen kurzkettigen Alkoholen gehören insbesondere Methanol, Ethanol, n-Propanol, n-Butanol, n-Pentanol, n-Hexanol und n-Heptanol.

Zu den linearen langkettigen Alkoholen gehören insbesondere Octadecanol (Stearylalkohol). Von den verzweigten langkettigen sind insbesondere 2-Ethylhexanol, 2-Propylheptanol, Iso-decanol und Iso-tridecanol zu nennen.

Geeignete Alkohole sind sowohl aus nativen Quellen als auch auf synthetischem Weg, z. B. durch Aufbau aus Edukten mit einer geringeren Zahl an Kohlenstoffatomen erhältlich.

Gemäß einer besonderen Ausführungsform basieren die erfindungsgemäß zu verwendenden Alkoholalkoxylate auf primären, $\alpha$-verzweigten Alkoholen der Formel (III),

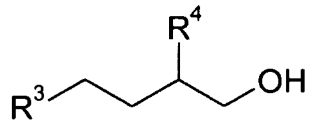

(III)

worin

$R^3$, $R^4$ unabhängig voneinander für Wasserstoff oder $C_1$-$C_{26}$-Alkyl stehen.

Vorzugsweise stehen $R^3$ und $R^4$ unabhängig voneinander für $C_1$-$C_6$-Alkyl und insbesondere für $C_2$-$C_4$-Alkyl.

Gemäß einer besonderen Ausführungsform werden Alkoholalkoxylate verwendet, deren Alkoholteil 2-Propylheptanol ist. Hierzu gehören insbesondere Alkoholalkoxylate der Formel (Ib) oder Formel (IIb), worin R für einen 2-Propylheptyl-Rest steht, d.h. $R^3$ und $R^4$ in Formel (III) bedeuten jeweils n-Propyl.

Derartige Alkohole werden auch als Guerbet-Alkohole bezeichnet. Diese können beispielsweise durch Dimerisierung entsprechender primärer Alkohole (z.B. $R^{3,4}$-$CH_2CH_2OH$) bei erhöhter Temperatur, beispielsweise 180 bis 300°C, in Gegenwart eines alkalischen Kondensationsmittels, wie Kaliumhydroxid, erhalten werden.

Gemäß einer weiteren besonderen Ausführungsform werden Alkoholalkoxylate verwendet, deren Alkoholteil ein $C_{13}$-Oxoalkohol ist.

Besonders bevorzugt ist es, wenn diese $C_{13}$-Oxoalkohole durch Hydroformylierung und nachfolgende Hydrierung von ungesättigten $C_{12}$-Kohlenwasserstoffen erhältlich sind, insbesondere durch Hydrierung von hydroformyliertem Trimerbuten oder durch Hydrierung von hydroformyliertem Dimerhexen.

Der Begriff "$C_{13}$-Oxoalkohol" bezeichnet in der Regel ein Alkoholgemisch, dessen Hauptkomponente aus wenigstens einem verzweigten $C_{13}$-Alkohol (Isotridecanol) gebildet wird. Zu derartigen $C_{13}$-Alkoholen gehören insbesondere Tetramethylnonanole, beispielsweise 2,4,6,8-Tetramethyl-1-nonanol oder 3,4,6,8-Tetramethyl-1-nonanol sowie ferner Ethyldimethylnonanole wie 5-Ethyl-4,7-dimethyl-1-nonanol.

Geeignete $C_{13}$-Alkoholgemische sind allgemein erhältlich durch Hydrierung von hydroformyliertem Trimerbuten. Insbesondere kann man

1) Butene zur Oligomerisierung mit einem geeigneten Katalysator in Kontakt bringen,
2) aus dem Reaktionsgemisch eine $C_{12}$-Olefinfraktion isolieren,
3) die $C_{12}$-Olefinfraktion durch Umsetzung mit Kohlenmonoxid und Wasserstoff in Gegenwart eines geeigneten

Katalysators hydroformylieren und
4) hydrieren.

Die der Hydrierung vorangehende Butentrimerisierung kann mittels homogener oder heterogener Katalyse erfolgen.

Aus dem Reaktionsaustrag der beschriebenen Oligomerisierungsreaktion wird in einem oder mehreren Trennschritten zunächst eine dann zur Darstellung verwendbarer $C_{13}$-Alkoholgemische durch Hydroformylierung und Hydrierung geeignete $C_{12}$-Olefinfraktion isoliert (Verfahrensschritt 2). Geeignete Trennvorrichtungen sind die üblichen, dem Fachmann bekannten Apparaturen.

Zur Herstellung eines erfindungsgemäßen Alkoholgemisches wird die so isolierte $C_{12}$-Olefinfraktion zu $C_{13}$-Aldehyden hydroformyliert (Verfahrensschritt 3) und anschließend zu $C_{13}$-Alkoholen hydriert (Verfahrensschritt 4). Dabei kann die Herstellung der Alkoholgemische einstufig oder in zwei separaten Reaktionsschritten erfolgen.

Eine Übersicht über Hydroformylierungsverfahren und geeignete Katalysatoren findet sich in Beller et al., Journal of Molecular Catalysis A 104 (1995), S. 17-85.

Zur Hydrierung werden die bei der Hydroformylierung erhaltenen Reaktionsgemische mit Wasserstoff in Gegenwart eines Hydrierkatalysators umgesetzt.

Weitere geeignete $C_{13}$-Alkoholgemische sind dadurch erhältlich, dass man

1) ein $C_4$-Olefin-Gemisch der Metathese unterwirft,
2) aus dem Metathesegemisch Olefine mit 6 C-Atomen abtrennt,
3) die abgetrennten Olefine einzeln oder im Gemisch einer Dimerisierung zu Olefingemischen mit 12 C-Atomen unterzieht, und
4) das so erhaltene Olefingemisch, gegebenenfalls nach einer Fraktionierung, der Derivatisierung zu einem Gemisch von $C_{13}$-Oxoalkoholen unterwirft.

Aus dem nach der Hydrierung erhaltenen Gemisch kann nach üblichen, dem Fachmann bekannten Reinigungsverfahren, insbesondere durch fraktionierte Destillation, das erfindungsgemäße $C_{13}$-Alkoholgemisch zur Verwendung als Komponente ($a_I$) rein gewonnen werden.

Erfindungsgemäße $C_{13}$-Alkoholgemische weisen in der Regel einen mittleren Verzweigungsgrad von 1 bis 4 auf, vorzugsweise von 2,0 bis 2,5 und insbesondere 2,1 bis 2,3 (auf Basis von Trimerbuten) bzw. von 1,3 bis 1,8 und insbesondere 1,4 bis 1,6 (auf Basis von Dimerhexen). Als Verzweigungsgrad ist die Zahl der Methylgruppen in einem Molekül des Alkohols abzüglich 1 definiert. Der mittlere Verzweigungsgrad ist der statistische Mittelwert der Verzweigungsgrade der Moleküle einer Probe. Die mittlere Zahl der Methylgruppen in den Molekülen einer Probe kann leicht $^1$H-NMR-spektroskopisch ermittelt werden. Hierzu wird die den Methylprotonen entsprechende Signalfläche im 1 H-NMR-Spektrum einer Probe durch 3 dividiert und zu der durch zwei dividierten Signalfläche der Methylenprotonen in der $CH_2$-OH-Gruppe ins Verhältnis gesetzt.

Gemäß einer weiteren besonderen Ausführungsform werden Alkoholalkoxylate verwendet, deren Alkoholteil ein $C_{10}$-Oxoalkohol ist. Der Begriff "$C_{10}$-Oxoalkohol" steht in Analogie zu dem bereits erläuterten Begriff "$C_{13}$-Oxoalkohol" für $C_{10}$-Alkoholgemische, dessen Hauptkomponente aus wenigstens einem verzweigten $C_{10}$-Alkohol (Isodecanol) gebildet wird.

Besonders bevorzugt ist es, wenn geeignete $C_{10}$-Alkoholgemische durch Hydrierung von hydroformyliertem Trimerpropen erhalten werden.

Insbesondere kann man

1) Propene zwecks Oligomerisierung mit einem geeigneten Katalysator in Kontakt bringen,
2) aus dem Reaktionsgemisch eine $C_9$-Olefinfraktion isolieren,
3) die $C_9$-Olefinfraktion durch Umsetzung mit Kohlenmonoxid und Wasserstoff in Gegenwart eines geeigneten Katalysators hydroformylieren und
4) hydrieren.

Besondere Ausführungsformen dieser Vorgehensweise ergeben sich in Analogie zu den oben für die Hydrierung von hydroformyliertem Trimerbuten beschriebenen Ausgestaltungen.

Erfindungsgemäße $C_{10}$-Alkoholgemische weisen in der Regel einen mittleren Verzweigungsgrad von 0 bis 3 auf, vorzugsweise von 0,5 bis 2,5 und insbesondere 1,0 bis 1,5 (auf Basis von Trimerpropen) auf.

Gemäß einer Ausführungsform ist der alkoxylierte Alkohol ausgewählt unter alkoxylierten Alkoholen der Formel (IIb), worin o Null ist.

Die Alkoxylierung ergibt sich aus der Umsetzung mit geeigneten Alkylenoxiden, nämlich mit wenigstens einem höheren, 4 bis 16 und vorzugsweise 4 bis 10 Kohlenstoffatome aufweisenden Alkylenoxid, von denen insbesondere

1,2-Butylenoxid (BO) zu nennen ist, sowie mit Ethylenoxid (EO) und/oder 1,2-Propylenoxid (PO).

In Abhängigkeit von den für die Umsetzung gewählten Einsatzmengen an Alkylenoxid(en) sowie den Reaktionsbedingungen ergibt sich der jeweilige Alkoxylierungsgrad. Hierbei handelt es sich in der Regel um einen statistischen Mittelwert, da die Anzahl von Alkylen-oxid-Einheiten der aus der Umsetzung resultierenden Alkoholalkoxylate variiert.

Der Alkoxylierungsgrad, d.h. die mittlere Kettenlänge der Polyetherketten erfindungsgemäßer Alkoholalkoxylate und deren Zusammensetzung (sprich der Wert von x sowie die Werte von p und q) kann durch das bei Ihrer Herstellung eingesetzte Molmengenverhältnis von Alkohol zu Ethylenoxid/Propylenoxid und höherem Alkylenoxid sowie den Reaktionsbedingungen gesteuert werden. Einerseits umfassen die erfindungsgemäßen Alkoholalkoxylate bevorzugt mindestens oder mehr als etwa 2, bevorzugter mindestens oder mehr als etwa 4, insbesondere mindestens oder mehr als etwa 6, vor allem mindestens oder mehr als etwa 8, und besonders bevorzugt mindestens oder mehr als etwa 10 Alkylenoxid-Einheiten. Andererseits umfassen die erfindungsgemäßen Alkoholalkoxylate bevorzugt höchstens oder weniger als etwa 100, 90 oder 85, bevorzugter höchstens oder weniger als etwa 80, 70 oder 65, insbesondere höchstens oder weniger als etwa 60, 50 oder 45, vor allem höchstens oder weniger als etwa 40 oder 35, und besonders bevorzugt höchstens oder weniger als etwa 30 oder 25 Alkylenoxid-Einheiten.

In den erfindungsgemäßen Alkoholalkoxylaten können die höheren Alkylenoxid- und Ethylenoxid/Propylenoxid-Einheiten, soweit vorhanden, innerhalb der formelmäßig vorgegebenen Strukturen beliebig angeordnet sein. Die Struktureinheit $[...]_{co}$ kann somit ein statistisches Copolymer, ein Gradientencopolymer, ein alternierendes oder ein Blockcopolymer aus Ethylenoxid-und Propylenoxid-Einheiten sein.

Die erfindungsgemäßen Alkoholalkoxylate weisen somit einen hydrophoben Alkoxylatteil ($-(C_4H_8O)_x-$) und einen hydrophilen Alkoxylatteil ($-[(C_2H_4O)_p-(C_3H_6O)_q]_{co}-$) auf. In den Alkoholalkoxylaten der Formel (Ib) bildet der Alkoholrest R-O- zusammen mit dem hydrophoben Alkoxylatteil ($-(C_4H_8O)_x-$) den hydrophoben Teil der Alkoholalkoxylate. In den Alkoholalkoxylaten der Formel (IIb) bildet der hydrophobe Alkoxylatteil ($-(C_4H_8O)_x-$) den hydrophoben Teil der Alkoholalkoxylate.

Allerdings können der hydrophobe Alkoxylatteil relativ geringe Anteile an Ethylenoxid-und/oder Propylenoxid-Einheiten und/oder der hydrophile Alkoxylatteil relativ geringe Anteile an höheren Alkylenoxid-Einheiten aufweisen, ohne dass die Eigenschaften der erfindungsgemäßen Alkoholalkoxylate nennenswert beeinträchtigen werden. Die Formeln (Ib) und (IIb) sind daher so zu lesen, dass ein Teil der Einheiten $-(C_2H_4O)$-und/oder $-(C_3H_6O)-$ im hydrophoben Teil beziehungsweise ein Teil der Einheiten $-(C_4H_8O)-$ im hydrophilen Teil angeordnet sein kann. Eine solche Konstellation kann durch die Herstellung der erfindungsgemäßen Alkoholalkoxylate bedingt sein, beispielsweise dann, wenn Ethylenoxid und/oder Propylenoxid bereits zugefahren werden, bevor das oder die höheren Alkylenoxid(e) vollständig abreagiert haben. Allerdings sollte der Anteil an Ethylenoxid- und/oder Propylenoxid-Einheiten im hydrophoben Alkoxylatteil 20 mol-%, vorzugsweise 10 mol-% und insbesondere 5 mol% nicht übersteigen. Gleichermaßen sollte der Anteil an höheren Alkylenoxid-Einheiten im hydrophilen Alkoxylatteil 20 mol%, vorzugsweise 10 mol% und insbesondere 5 mol% nicht übersteigen. Einer besonders bevorzugten Ausführungsform zufolge betragen der Anteil an Ethylenoxid- und/oder Propylenoxid-Einheiten im hydrophoben Alkoxylatteil und der Anteil an höheren Alkylenoxid-Einheiten im hydrophilen Alkoxylatteil jeweils weniger als 1 mol%.

Für den hydrophoben Alkoxylatteil ist die Blockanordnung bevorzugt ($R-O-(C_4H_8O)_x-[(C_2H_4O)_p-(C_3H_6O)_q]_{co}-H$ bzw. $R-O-(C_{n1}H_{2n1}O)_o-[(C_2H_4O)_p-(C_3H_6O)_q]_{co}-(C_4H_8O)_x-H$). Für den hydrophilen Alkoxylatteil ist neben der bevorzugten Blockanordnung ($R-O-(C_4H_8O)_x-[(C_2H_4O)_p-(C_3H_6O)_q]_{co}-H$ bzw. $R-O-(C_{n1}H_{2n1}O)_o-[(C_2H_4O)_p-(C_3H_6O)_q]_{co}-(C_4H_8O)_x-H$)) des Weiteren insbesondere auch ein statistisches Copolymer in Betracht zu ziehen.

$-C_mH_{2m}O-$ (bei m gleich oder größer 3) bedeutet entweder $-CH(C_{m-2}H_{2m-3})CH_2O-$ (z.B. $-CH(CH_3)CH_2O-$) oder $-CH_2CH(C_{m-2}H_{2m-3})O-$ (z.B. $-CH_2CH(CH_3)O-$). Dabei kann ein bestimmtes Alkoholalkoxylat im Wesentlichen Alkylenoxid-Einheiten der einen oder der anderen Art, oder beide enthalten. Ein Alkylenoxid-Block kann sich im Wesentlichen aus Alkylenoxid-Einheiten der Formel $-CH_2CH(C_{m-2}H_{2m-3})O-$, im Wesentlichen aus Alkylenoxid-Einheiten der Formel $-CH(C_{m-2}H_{2m-3})CH_2O-$, oder sowohl aus Alkylenoxid-Einheiten der Formel $-CH_2CH(C_{m-2}H_{2m-3})O-$ als auch aus Alkylenoxid-Einheiten der Formel $-CH(C_{m-2}H_{2m-3})CH_2O-$ zusammensetzen, wobei in letzterem Fall die beiden Alkylenoxid-Einheiten statistisch verteilt, alternierend oder in zwei oder mehreren Unterblöcken angeordnet sein können. Bei der basenkatalysierten Alkoxylierung erhält man überwiegend Alkylenoxid-Einheiten der Formel $-CH_2CH(C_{m-2}H_{2m-3})O-$, da der Angriff des Anions bevorzugt am sterisch weniger gehinderten sekundären Kohlenstoffatom des Alkylenoxids erfolgt. Üblich sind Molverhältnisse von mehr als 60:40, 70:30 oder 80:20, beispielsweise etwa 85:15, zugunsten von Alkylenoxid-Einheiten der Formel $-CH_2CH(C_{m-2}H_{2m-3})O-$.

Der hydrophobe Teil der erfindungsgemäßen Alkoholalkoxylate ist dadurch gekennzeichnet, dass er mindestens 15 Kohlenstoffatome aufweist. Dazu tragen sowohl die Kohlenstoffatome des Restes R als auch die Kohlenstoffatome des hydrophoben Alkoxylatteils bei. Vorzugsweise weist der hydrophobe Teil der erfindungsgemäßen Alkoholalkoxylate wenigstens 17 und insbesondere wenigstens 19 Kohlenstoffatome auf. Andererseits ist der hydrophobe Teil der Alkoholalkoxylate einem weiteren Aspekt der Erfindung zufolge dadurch gekennzeichnet, dass er höchstens 60, vorzugsweise höchstens 55 oder 50, und insbesondere höchstens 46 Kohlenstoffatome aufweist.

Der hydrophobe Teil der erfindungsgemäßen Alkoholalkoxylate ist auch dadurch gekennzeichnet, dass er

mindestens 2 Verzweigungen aufweist. Wenigstens 1 Verzweigung liegt dabei im Alkoxylatteil. Andererseits ist der hydrophobe Teil der Alkoholalkoxylate einem weiteren Aspekt der Erfindung zufolge dadurch gekennzeichnet, dass er höchstens 12, vorzugsweise höchstens 11 oder 10, und insbesondere höchstens 9 Verzweigungen aufweist. Tatsächlich steuert jedes höhere Alkylenoxid eine Verzweigung bei, weshalb die Zahl an Verzweigungen im hydrophoben Alkoxylatteil der Summe der von den höhreren Alkylenoxid-Einheiten beigesteuerten Kohlenstoffatome entspricht, d.h. x.

Der hydrophobe Teil der erfindungsgemäßen Alkoholalkoxylate ist ferner dadurch gekennzeichnet, dass er wenigstens etwa 0,1, vorzugsweise wenigstens etwa 0,13 und insbesondere wenigstens etwa 0,16 Verzweigungen pro C-Atom aufweist. Andererseits ist der hydrophobe Teil der Alkoholalkoxylate einem weiteren Aspekt der Erfindung zufolge dadurch gekennzeichnet, dass er höchstens 0,3, vorzugsweise höchstens 0,27, und insbesondere höchstens 0,25 Verzweigungen aufweist.

Bevorzugt sind beispielsweise Alkoholalkoxylate der Formel (Ib) oder der Formel (IIb), deren hydrophober Alkoxylatteil etwa 1 bis 30, vorzugsweise 2 bis 20 und insbesondere 3 bis 15 Alkylenoxid-Einheiten (x) aufweist.

Des Weiteren bevorzugt sind beispielsweise Alkoholalkoxylate der Formel (Ib) oder der Formel (IIb), deren hydrophiler Alkoxylatteil etwa 1 bis 50, vorzugsweise 3 bis 40 und insbesondere 5 bis 30 Ethylenoxid- und/oder Propylenoxid-Einheiten (p+q) aufweist.

Gemäß einer besonderen Ausführungsform betrifft die Erfindung Alkoholalkoxylate der Formel (Ib) oder der Formel (IIb), worin der Wert der Summe aus p und q größer als der Wert x ist. Hierbei handelt es sich um Alkoholalkoxylate, die mehr Ethylenoxid-und/oder Propylenoxid-Einheiten als Einheiten des höheren Alkylenoxids aufweisen.

Einerseits weisen solche Alkoholalkoxylate einen Alkoxylatteil auf, in dem das Verhältnis von Ethylenoxid/Propylenoxid zu höherem Alkylenoxid (p+q zu x) wenigstens oder mehr als 1,1:1, vorzugsweise wenigstens oder mehr als 1,5:1, vor allem wenigstens oder mehr als 2:1, und insbesondere wenigstens oder mehr als 2,5:1, beispielsweise wenigstens oder mehr als 3:1, beträgt. Andererseits weisen solche Alkoholalkoxylate einen Alkoxylatteil auf, im dem das Verhältnis von Ethylenoxid/Propylenoxid zu höherem Alkylenoxid (p+q zu x) höchstens oder weniger als 25:1, vorzugsweise höchstens oder weniger als 20:1, und insbesondere höchstens oder weniger als 15:1, beispielsweise höchstens oder weniger als 10:1, beträgt. Bevorzugt sind demnach Alkoxylate, bei denen das Verhältnis von Ethylenoxid/Propylenoxid zu höherem Alkylenoxid (p+q zu x) 1,1:1 bis 25:1, vorzugsweise 1,5:1 bis 20:1 und insbesondere 2:1 bis 15:1, beispielsweise 2,5:1bis 10:1, beträgt.

Eine besondere Ausführungsform sind Alkoholalkoxylate der Formel (Ib), worin q Null ist, d.h. alkoxylierte Alkohole der Formel (Id), deren hydrophiler Teil aus Ethylenoxid-Einheiten gebildet ist

$$R\text{-}O\text{-}(C_4H_8O)_x\text{-}(C_2H_4O)_p\text{-}H \qquad (Id),$$

worin R, x, p wie hierin definiert sind.

Der erfindungsgemäße Typ von Alkoholalkoxylat der Formel (Id) basiert auf einem Butylenoxidblock und einem Ethylenoxidblock, wobei der Ethylenoxidblock terminal angeordnet ist. Weitere besondere Ausgestaltungen ergeben sich aus den Ausführungen zu den Alkoholalkoxylaten der Formeln (Ib).

Die erfindungsgemäßen Alkoholalkoxylate der Formel (Id) weisen einen hydrophoben Alkoxylatteil ($R\text{-}O\text{-}(C_4H_8O)_x\text{-}$) und einen hydrophilen Alkoxylatteil ($\text{-}(C_2H_4O)_p\text{-}H$) auf.

Gemäß einer besonderen Ausführungsform ist der hydrophobe Teil der erfindungsgemäßen Alkoholalkoxylate der Formel (Id) dadurch gekennzeichnet, dass er mindestens 15 Kohlenstoffatome im Rest R und der Gruppe $\text{-}(C_4H_8O)_x\text{-}$ aufweist (sprich die Summe aus (4 • x) und der Anzahl der Kohlenstoffatome in R beträgt mindestens 15). Vorzugsweise weist der hydrophobe Teil der erfindungsgemäßen Alkoholalkoxylate wenigstens 20 und insbesondere wenigstens 30 Kohlenstoffatome auf. Andererseits ist der hydrophobe Teil der Alkoholalkoxylate einem weiteren Aspekt der Erfindung zufolge dadurch gekennzeichnet, dass er höchstens 60, vorzugsweise höchstens 50 oder 45 und insbesondere höchstens 40 Kohlenstoffatome aufweist.

Gemäß einer weiteren besonderen Ausführungsform ist der hydrophobe Teil der erfindungsgemäßen Alkoholalkoxylate der Formel (Id) dadurch gekennzeichnet, dass er mindestens 2 Verzweigungen aufweist. Vorzugsweise weist der hydrophobe Teil der erfindungsgemäßen Alkoholalkoxylate wenigstens 3,5 und insbesondere wenigstens 5 Verzweigungen auf. Wenigstens 1, vorzugsweise wenigstens wenigstens 2,5 und insbesondere wenigstens 4,5 Verzweigungen liegen dabei im Alkoxylatteil. Andererseits ist der hydrophobe Teil der Alkoholalkoxylate einem weiteren Aspekt der Erfindung zufolge dadurch gekennzeichnet, dass er höchstens 12, vorzugsweise höchstens 10 oder 8, und insbesondere höchstens 7 Verzweigungen aufweist. Tatsächlich steuert jedes Butylenoxid eine Verzweigung bei, weshalb die Zahl an Verzweigungen im hydrophoben Alkoxylatteil der Summe der von den Butylenoxid-Einheiten beigesteuerten Kohlenstoffatome entspricht, d.h. (4 • x).

Gemäß einer weiteren besonderen Ausführungsform ist der hydrophobe Teil der erfindungsgemäßen Alkoholalkoxylate der Formel (Id) dadurch gekennzeichnet, dass er wenigstens etwa 0,1, vorzugsweise wenigstens etwa 0,15 und insbesondere wenigstens etwa 0,2 Verzweigungen pro C-Atom aufweist. Andererseits ist der hydrophobe Teil der Alkoholalkoxylate einem weiteren Aspekt der Erfindung zufolge dadurch gekennzeichnet, dass er höchstens 0,3, vorzugsweise höchstens 0,28, und insbesondere höchstens 0,25 Verzweigungen aufweist.

Die erfindungsgemäßen Alkoholalkoxylate der Formel (Id) weisen einem weiteren besonderen Aspekt der Erfindung zufolge mindestens oder mehr als etwa 2,0, bevorzugt mindestens oder mehr als etwa 3,0, insbesondere mindestens oder mehr als etwa 4,5 Butylenoxid-Einheiten auf (Wert von x). Andererseits weisen die erfindungsgemäßen Alkoholalkoxylate der Formel (Id) einem weiteren besonderen Aspekt der Erfindung zufolge höchstens oder weniger als etwa 12, bevorzugt höchstens oder weniger als etwa 9,5, und insbesondere höchstens oder weniger als etwa 7,5 Butylenoxid-Einheiten auf (Wert von x). Bevorzugt sind demnach beispielsweise Alkoholalkoxylate der Formel (Id) mit etwa 2 bis 12, bevorzugt etwa 3 bis 9,5 und insbesondere etwa 4,5 bis 7,5 Butylenoxid-Einheiten (Wert von x).

Die erfindungsgemäßen Alkoholalkoxylate der Formel (Id) weisen einem weiteren besonderen Aspekt der Erfindung zufolge mindestens oder mehr als etwa 2, bevorzugt mindestens oder mehr als etwa 5, insbesondere mindestens oder mehr als etwa 9 Ethylenoxid-Einheiten auf (Wert von p). Andererseits weisen die erfindungsgemäßen Alkoholalkoxylate der Formel (Id) einem weiteren besonderen Aspekt der Erfindung zufolge höchstens oder weniger als etwa 30, bevorzugt höchstens oder weniger als etwa 25, und insbesondere höchstens oder weniger als etwa 20 Ethylenoxid-Einheiten auf (Wert von p). Bevorzugt sind demnach beispielsweise Alkoholalkoxylate der Formel (Id) mit etwa 2 bis 30, bevorzugt etwa 5 bis 25, und insbesondere etwa 9 bis 20 Ethylenoxid-Einheiten (Wert von p).

Die erfindungsgemäßen Alkoholalkoxylate der Formel (Id) weisen einem weiteren besonderen Aspekt der Erfindung zufolge einen Alkoxylatteil auf, im dem das Verhältnis von Ethylenoxid zu Butylenoxid (p zu x) wenigstens oder mehr als 1:3, bevorzugt wenigstens oder mehr als 1:2, und insbesondere wenigstens oder mehr als 2:3 beträgt. Andererseits weisen die erfindungsgemäßen Alkoholalkoxylate der Formel (Id) einem weiteren besonderen Aspekt der Erfindung zufolge einen Alkoxylatteil auf, im dem das Verhältnis von Ethylenoxid zu Butylenoxid (p zu x) höchstens oder weniger als 4:1, bevorzugt höchstens oder weniger als 3:1, und insbesondere höchstens oder weniger als 2:1 beträgt. Bevorzugt sind demnach beispielsweise Alkoxylate der Formel (Id), bei denen das Verhältnis von Ethylenoxid zu Butylenoxid (p zu x) 1:3 bis 4:1, vorzugsweise 1:2 bis 3:1, und insbesondere 2:3 bis 2:1 beträgt.

Gemäß einer weiteren Ausführungsform ist der alkoxylierte Alkohol ausgewählt unter alkoxylierten Alkoholen der Formel (IIb), worin o für 1, 2 oder 3 steht. Solche Alkoholalkoxylate lassen sich gezielt herstellen, indem man beispielsweise eine Verbindung der Formel (IV)

$$R\text{-}O\text{-}(C_mH_{2n1}O)_o\text{-}H \qquad (IV)$$

worin

R, n1 und o wie hierin definiert sind;

in der oben beschriebenen Weise alkoxyliert und gegebenenfalls endgruppenverschließt.

Bei den Verbindungen der Formel (IV) handelt es sich um an sich bekannte Mono-$C_1$-$C_7$-Alkylether des Ethylenglykols (n1 = 2; o = 1), Propylenglykols (n1 = 3; o = 1), Diethylenglykols (n1 = 2; o = 2), Dipropylenglykols (n1 = 3; o = 2), Triethylenglykols (n1 = 2; o = 3) oder Tripropylenglykols (n1 = 3; o = 3).

Erfindungsgemäß von besonderer Bedeutung sind die Alkylether des Mono-, Di- und Tripropylenglykols der Formel

$$R\text{-}O\text{-}(CH_2CH(CH_3)O)_o\text{-}H \qquad (IVa)$$

worin R und o wie hierin definiert ist.

Einem anderen Aspekt zufolge sind die Mono-$C_1$-$C_4$-Alkylether (d.h. R steht insbesondere für $C_1$-$C_4$-Alkyl) und hiervon vor allem die Dipropylenglykolmonoalkylether (o = 2) hervorzuheben. Hierzu gehören insbesondere Dipropylenglykolmonomethylether, Dipropylenglykolmonoethylether, Dipropylenglykolmono-n-propylether und Dipropylenglykolmono-n-butylether.

Eine besondere Ausführungsform sind Alkoholalkoxylate der Formel (IIb), worin q Null ist, d.h. alkoxylierte Alkohole der Formel (IId), deren hydrophiler Teil aus Ethylenoxid-Einheiten gebildet ist

$$R\text{-}O\text{-}(C_{n1}H_{2n1}O)_o\text{-}(C_2H_4O)_p\text{-}(C_4H_8O)_x\text{-}H \qquad (IId),$$

worin R, n1, o, x, p wie hierin definiert sind.

Der erfindungsgemäße Typ von Alkoholalkoxylat der Formel (IId) basiert auf einem Butylenoxidblock und einem Ethylenoxidblock, wobei der Butylenoxidblock terminal angeordnet ist. Weitere besondere Ausgestaltungen ergeben sich aus den Ausführungen zu den Alkoholalkoxylaten der Formeln (IIb).

Die erfindungsgemäßen Alkoholalkoxylate der Formel (IId) weisen einen hydrophoben Alkoxylatteil (-$(C_4H_8O)_x$-H) und einen hydrophilen Alkoxylatteil (-$(C_{n1}H_{2n1}O)_o$-$(C_2H_4O)_p$-) auf.

Gemäß einer besonderen Ausführungsform ist der hydrophobe Teil der erfindungsgemäßen Alkoholalkoxylate der Formel (IId) dadurch gekennzeichnet, dass er mindestens 15 Kohlenstoffatome in der Gruppe -$(C_4H_8O)_x$-aufweist

(sprich (4 • x) beträgt mindestens 15). Vorzugsweise weist der hydrophobe Teil der erfindungsgemäßen Alkoholalkoxylate wenigstens 20 und insbesondere wenigstens 30 Kohlenstoffatome auf. Andererseits ist der hydrophobe Teil der Alkoholalkoxylate einem weiteren Aspekt der Erfindung zufolge dadurch gekennzeichnet, dass er höchstens 60, vorzugsweise höchstens 50 oder 45 und insbesondere höchstens 40 Kohlenstoffatome aufweist.

Gemäß einer weiteren besonderen Ausführungsform ist der hydrophobe Teil der erfindungsgemäßen Alkoholalkoxylate der Formel (IId) dadurch gekennzeichnet, dass er mindestens 2 Verzweigungen aufweist. Vorzugsweise weist der hydrophobe Teil der erfindungsgemäßen Alkoholalkoxylate wenigstens 3,5 und insbesondere wenigstens 5 Verzweigungen auf. Wenigstens 1, vorzugsweise wenigstens 2,5 und insbesondere wenigstens 4,5 Verzweigungen liegen dabei im Alkoxylatteil. Andererseits ist der hydrophobe Teil der Alkoholalkoxylate einem weiteren Aspekt der Erfindung zufolge dadurch gekennzeichnet, dass er höchstens 12, vorzugsweise höchstens 10 oder 8, und insbesondere höchstens 7 Verzweigungen aufweist. Tatsächlich steuert jedes Butylenoxid eine Verzweigung bei, weshalb die Zahl an Verzweigungen im hydrophoben Alkoxylatteil der Summe der von den Butylenoxid-Einheiten beigesteuerten Kohlenstoffatome entspricht, d.h. (4 • x).

Gemäß einer weiteren besonderen Ausführungsform ist der hydrophobe Teil der erfindungsgemäßen Alkoholalkoxylate der Formel (IId) dadurch gekennzeichnet, dass er wenigstens etwa 0,1, vorzugsweise wenigstens etwa 0,15 und insbesondere wenigstens etwa 0,2 Verzweigungen pro C-Atom aufweist. Andererseits ist der hydrophobe Teil der Alkoholalkoxylate einem weiteren Aspekt der Erfindung zufolge dadurch gekennzeichnet, dass er höchstens 0,3, vorzugsweise höchstens 0,28, und insbesondere höchstens 0,25 Verzweigungen aufweist.

Die erfindungsgemäßen Alkoholalkoxylate der Formel (IId) weisen einem weiteren besonderen Aspekt der Erfindung zufolge mindestens oder mehr als etwa 2, bevorzugt mindestens oder mehr als etwa 3, insbesondere mindestens oder mehr als etwa 4,5 Butylenoxid-Einheiten auf (Wert von x). Andererseits weisen die erfindungsgemäßen Alkoholalkoxylate der Formel (IId) einem weiteren besonderen Aspekt der Erfindung zufolge höchstens oder weniger als etwa 12, bevorzugt höchstens oder weniger als etwa 9,5, und insbesondere höchstens oder weniger als etwa 7,5 Butylenoxid-Einheiten auf (Wert von x). Bevorzugt sind demnach beispielsweise Alkoholalkoxylate der Formel (IId) mit etwa 2 bis 12, bevorzugt etwa 3 bis 9,5, und insbesondere etwa 4,5 bis 7,5 Butylenoxid-Einheiten (Wert von x).

Die erfindungsgemäßen Alkoholalkoxylate der Formel (IId) weisen einem weiteren besonderen Aspekt der Erfindung zufolge mindestens oder mehr als etwa 2, bevorzugt mindestens oder mehr als etwa 5, insbesondere mindestens oder mehr als etwa 9 Ethylenoxid-Einheiten auf (Wert von p). Andererseits weisen die erfindungsgemäßen Alkoholalkoxylate der Formel (IId) einem weiteren besonderen Aspekt der Erfindung zufolge höchstens oder weniger als etwa 30, bevorzugt höchstens oder weniger als etwa 25, und insbesondere höchstens oder weniger als etwa 20 Ethylenoxid-Einheiten auf (Wert von p). Bevorzugt sind demnach beispielsweise Alkoholalkoxylate der Formel (IId) mit etwa 2 bis 30, bevorzugt etwa 5 bis 25, und insbesondere etwa 9 bis 20 Ethylenoxid-Einheiten (Wert von p).

Die erfindungsgemäßen Alkoholalkoxylate der Formel (IId) weisen einem weiteren besonderen Aspekt der Erfindung zufolge einen Alkoxylatteil auf, im dem das Verhältnis von Ethylenoxid zu Butylenoxid (p zu x) wenigstens oder mehr als 1:3, bevorzugt wenigstens oder mehr als 1:2, und insbesondere wenigstens oder mehr als 2:3 beträgt. Andererseits weisen die erfindungsgemäßen Alkoholalkoxylate der Formel (IId) einem weiteren besonderen Aspekt der Erfindung zufolge einen Alkoxylatteil auf, im dem das Verhältnis von Ethylenoxid zu Butylenoxid (p zu x) höchstens oder weniger als 4:1, bevorzugt höchstens oder weniger als 3:1, und insbesondere höchstens oder weniger als 2:1 beträgt. Bevorzugt sind demnach beispielsweise Alkoxylate der Formel (IId), bei denen das Verhältnis von Ethylenoxid zu Butylenoxid (p zu x) 1:3 bis 4:1, vorzugsweise 1:2 bis 3:1, und insbesondere 2:3 bis 2:1 beträgt.

Die Umsetzung der Alkohole bzw. Alkoholgemische mit dem/den Alkylenoxid(en) erfolgt nach üblichen, dem Fachmann bekannten Verfahren und in dafür üblichen Apparaturen.

Die Alkoxylierung kann durch starke Basen, wie Alkalihydroxide und Erdalkalihydroxide, Brönstedsäuren oder Lewissäuren, wie $AlCl_3$, $BF_3$ etc. katalysiert werden. Für eng verteilte Alkoholoxylate können Katalysatoren wie Hydrotalcit oder DMC verwendet werden.

Die Alkoxylierung erfolgt vorzugsweise bei Temperaturen im Bereich von etwa 80 bis 250 °C, bevorzugt etwa 100 bis 220 °C. Der Druck liegt vorzugsweise zwischen Umgebungsdruck und 600 bar. Gewünschtenfalls kann das Alkylenoxid eine Inertgasbeimischung, z. B. von etwa 5 bis 60 %, enthalten.

Das theoretische Molekulargewicht erfindungsgemäß geeigneter Alkoholalkoxylate beträgt in der Regel weniger als 2000 g/mol. Bevorzugt sind Alkoholalkoxylate mit einem Molekulargewicht von weniger als 1800 g/mol, weniger als 1700 g/mol, oder weniger als 1500 g/mol. Einer besonderen Ausführungsform zufolge beträgt das Molekulargewicht weniger als 1400 g/mol.

Das gewichtsmittlere Molekulargewicht erfindungsgemäß geeigneter Alkoholalkoxylate beträgt in der Regel weniger als 2000 g/mol. Bevorzugt sind Alkoholalkoxylate mit einem Molekulargewicht von weniger als 1800 g/mol, weniger als 1700 g/mol, oder weniger als 1500 g/mol. Einer besonderen Ausführungsform zufolge beträgt das Molekulargewicht weniger als 1400 g/mol. Die Angaben zu den gewichtsmittleren Molekulargewichten beziehen auf die Bestimmung mittels Gelpermeationschromatographie nach DIN 55672.

Der Begriff "Verzweigungsgrad" von R wird hier in prinzipiell bekannter Art und Weise für die Zahl der Methylgruppen in R abzüglich 1 definiert. Für Z gilt Analoges. Der Verzweigungsgrad des Alkoxylatteils ergibt sich aus dem Alkoxylierungsgrad und den an der Alkoxylierung beteiligten Alkylenoxiden. Der mittlere Verzweigungsgrad ist der statistische Mittelwert der Verzweigungsgrade aller Moleküle einer Probe.

Der mittlere Verzweigungsgrad kann für primäre und/oder sekundäre Alkohole wie folgt $^1$H-NMR-spektroskopisch ermittelt werden: Dazu wird eine Probe des Alkohols zunächst einer Derivatisierung mit Trichloracetylisocyanat (TAI) unterzogen. Dabei werden die Alohole in die Carbaminsäureester überführt. Die Signale der veresterten primären Alkohole liegen bei δ□= 4,7 bis 4,0 ppm, die der veresterten sekundären Alkohole bei etwa 5 ppm und in der Probe vorhandenes Wasser reagiert mit TAI zur Carbaminsäure ab. Alle Methyl-, Methylen- und Methinprotonen liegen im Bereich von 2,4 bis 0,4 ppm. Die Signale < 1 ppm sind dabei den Methylgruppen zugeordnet. Aus dem so erhalten Spektrum läßt sich der mittlere Verzweigungsgrad (Iso-Index) wie folgt berechnen:

$$\text{Iso-Index} = ((F(CH_3) / 3) / (F(CH_2\text{-}OH) / 2 + F(CHR\text{-}OH))) - 1$$

wobei $F(CH_3)$ für die den Methylprotonen entsprechende Signalfläche, $F(CH_2\text{-}OH)$ für die Signalfläche der Methylenprotonen in der $CH_2$-OH-Gruppe und F(CHR-OH) für die Signalfläche der Methinprotonen in der CHR-OH-Gruppe steht.

Anteile der Komponente (b), d.h. an Alkoholalkoxylat, am Gesamtgewicht des erfindungsgemäßen Mittels von mehr als 1 Gew.-%, vorzugsweise von mehr als 5 Gew.-% und insbesondere von mehr als 10 Gew.-% sind von Vorteil. Andererseits sind Anteile der Komponente (b) am Gesamtgewicht des Mittels von weniger als 50 Gew.-%, vorzugsweise von weniger als 45 Gew.-% und insbesondere von weniger als 40 Gew.-% in der Regel zweckmäßig.

Als Pflanzenschutzwirkstoff (Pestizid) der Komponente (a) kann hierbei jede Substanz bezeichnet werden, deren Zweck bzw. Wirkung es ist, dem Befall einer Pflanze durch irgendeinen Schädling vorzubeugen oder den Schädling abzuwehren, abzuschrecken, zu vernichten oder auf andere Weise den von ihm verursachten Schaden zu verringern. Wie eingangs gesagt, können Pflanzenschädlinge zu verschiedenen Gruppen von Lebewesen gehören; unter den höheren Tieren sind insbesondere unter Insekten und Milben zahlreiche wichtige Schädlinge zu finden, ferner unter Nematoden und Schnecken; Wirbeltiere wie Säuger und Vögel sind in den Industrieländern heute von untergeordneter Bedeutung. Zahlreiche Gruppen von Mikroben, darunter Pilze, Bakterien einschließlich der Mykoplasmen, Viren und Viroide umfassen Schädlinge, und auch Unkräuter, die mit Nutzpflanzen um knappen Lebensraum und andere Ressourcen konkurrieren, können zu den Schädlingen im weiteren Sinne gerechnet werden. Pestizide umfasen insbesondere Avizide, Acarizide, Austrocknungsmittel, Bakterizide, Chemosterilisatoren, Entlaubungsmittel, Fraßhemmer, Fungizide, Herbizide, Herbizidsicherungsstoffe, Insektenlockstoffe, Insektizide, Insektenabschreckmittel, Molluskizide, Nematizide, Paarungsverhinderer (mating disrupters), Pflanzenaktivatoren, Pflanzenwachstumsregulatoren, Rodentizide, Säugerabschreckmittel, Synergisten, Vogelabschreckmittel und Viruzide.

Aufgeschlüsselt nach chemischen Klassen umfassen Pestizide insbesondere Acylalaninfungizide, Acylaminosäurefungizide, aliphatische Amid-Organothiophosphatinsektizide, aliphatische Organothiophosphatinsektizide, aliphatische Stickstofffungizide, Amidfungizide, Amidherbizide, Anilidfungizide, Anilidherbizide, anorganische Fungizide, anorganische Herbizide, anorganische Rodentizide, Antiauxine, Antibiotika-Acarizide, Antibiotikafungizide, Antibiotikaherbizide, Antibiotikainsektizide, Antibiotikanematizide, Aromatensäurenfungizide, Aromatensäurenherbizide, Arsenherbizide, Arseninsektizide, Arylalaninherbizide, Aryloxyphenoxypropionsäureherbizide, Auxine, Avermectinacarizide, Avermectininsektizide, Benzamidfungizide, Benzanilidfungizide, Benzimidazolfungizide, Benzimidazolvorläuferfungizide, Benzimidazolylcarbamatfungizide, Benzoesäureherbizide, Benzofuranylalkylsulfonatherbizide, Benzofuranylmethylcarbamatinsektizide, Benzothiazolfungizide, Benzothiopyranorganothiophosphatinsektizide, Benzotriazineorganothiophosphatinsektizide, Benzoylcyclohexandionherbizide, Bipyridyliumherbizide, Brückendiphenylacarizide, Brückendiphenylfungizide, Carbamatacarizide, Carbamatfungizide, Carbamatherbizide, Carbamatinsektizide, Carbamatnematizide, Carbanilatfungizide, Carbanilatherbizide, Chinolinecarboxylatherbizide, Chinolinfungizide, Chinonfungizide, Chinoxalinacarizide, Chinoxalineorganothiophosphatinsektizide, Chinoxalinfungizide, Chitinsyntheseinhibitoren, Chloracetanilidherbizide, Chlornicotinylinsektizide, Chlorpyridinherbizide, Chlortriazinherbizide, Conazolfungizide, Cumarinrodentizide, Cyclodithiocarbamatfungizide, Cyclohexenoximherbizide, Cyclopropylisoxazolherbizide, Cytokinine, Diacylhydrazininsektizide, Dicarboximidfungizide, Dicarboximidherbizide, Dichlorphenyldicarboximidfungizide, Dimethylcarbamatinsektizide, Dinitroanilinherbizide, Dinitrophenolacarizide, Dinitrophenolfungizide, Dinitrophenolherbizide, Dinitrophenolinsektizide, Diphenyletherherbizide, Dithiocarbamatfungizide, Dithiocarbamatherbizide, Entlaubungsmittel, Ethylenfreisetzer, Fluorinsektizide, Furamidfungizide, Furanilidfungizide, Gibberelline, halogenierte aliphatische Herbizide, Harnstofffungizide, Harnstoffherbizide, Harnstoffinsektizide, Harnstoffrodentizide, Häutungshormone, Häutungshormonmimetika, Häutungsverhinderer, heterocyclische Organothiophosphatinsektizide, Imidazolfungizide, Imidazolinonherbizide, Indandionrodentizide, Insektenwachstumsregulatoren, Isoindolorganothiophosphatinsektizide, Isoxazolorganothiophosphatinsektizide, Juvenilhormone, Juvenilhormonmimetika, Kupferfungizide, macrocyclische Lactonacarizide, macrocyclische Lactoninsektizide, Methoxytriazinherbizide, Methylthiotriazinherbizide, Milbemycinacarizide, Milbemycininsektizide, Milbenwachstumsregulatoren, Morphactine, Morpholinfungizide, Nereistoxinanaloga, Nicotinoidinsektizide, Nitrilherbizide, Nitroguanidininsektizide, Nitromethyleninsektizide, Nitrophenyletherherbizide, Organochlorinacarizide, Organochlorininsektizide, Organochlorinrodentizide, Organophosphatacarizide, Organophosphatinsektizide, Organophosphatnematizide, Organophosphoracarizide, Organophosphorfungizide, Organophosphorherbizide, Organophosphorinsektizide, Organophosphornematizide, Organophosphor-Rodentizide, Organothiophosphatacarizide, Organothiophosphatinsektizide, Organothiophosphatnematizide, Organotinacarizide, Organozinnfungizide, Oxadiazininsektizide, Oxathiinfungizide, Oxazolfungizide, Oximcarbamatacarizide, Oximcarbamatnematizide, Oximcarbamatinsektizide, Oximorganothiophosphatinsektizide, pflanzliche Insektizide, pflanzliche Rodentizide, Phenoxybuttersäureherbizide, Phenoxyessigsäureherbizide, Phenoxyherbizide, Phenoxypropionsäureherbizide, Phenylendiaminherbizide, Phenylethylphosphonothioatinsektizide, Phenylharnstoffherbizide, Phenylmethylcarbamatinsektizide, Phenylorganothiophosphatinsektizide, Phenylphenylphosphonothioatinsektizide, Phenylpyrazolylketonherbizide, Phenylsulfamidacarizide, Phenylsulfamidfungizide, Phosphonatacarizide, Phosphonatinsektizide, Phosphonothioatinsektizide, Phosphoramidatinsektizide, Phosphoramidothioatacarizide, Phosphoramidothioatinsektizide, Phosphorodiamidacarizide, Phosphorodiamidinsektizide, Phthalatherbizide, Phthalimidacarizide, Phthalimidfungizide, Phthalimidinsektizide, Picolatherbizide, polymere Dithiocarbamatfungizide, Polysulfidfungizide, Precocene, Pyrazolacarizide, Pyrazolfungizide, Pyrazolinsektizide, Pyrazolopyrimidineorganothiophosphatinsektizide, Pyrazolyloxyacetophenonherbizide, Pyrazolylphenylherbizide, Pyrethroidacarizide, Pyrethroidesteracarizide, Pyrethroidesterinsektizide, Pyrethroidetheracarizide, Pyrethroidetherinsektizide, Pyrethroidinsektizide, Pyridazinherbizide, Pyridazinonherbizide, Pyridinfungizide, Pyridinherbizide, Pyridinorganothiophosphatinsektizide, Pyridylmethylamininsektizide, Pyrimidinaminacarizide, Pyrimidinamininsektizide, Pyrimidinaminrodentizide, Pyrimidinediaminherbizide, Pyrimidineorganothiophosphatinsektizide, Pyrimidinfungizide, Pyrimidinyloxybenzoesäureherbizide, Pyrimidinylsulfonylharnstoffherbizide, Pyrimidinylthiobenzoesäureherbizide, Pyrrolacarizide, Pyrrolfungizide, Pyrrolinsektizide, quaternäre Ammoniumherbizide, Strobilurinfungizide, Sulfitesteracarizide, Sulfonamidfungizide, Sulfonamidherbizide, Sulfonanilidfungizide, Sulfonanilidherbizide, Sulfonylharnstoffherbizide, Tetrazinacarizide, Tetronatacarizide, Tetronatinsektizide, Thiadiazoleorganothiophosphatinsektizide, Thiadiazolylharnstoffherbizide, Thiazolfungizide, Thiocarbamatacarizide, Thiocarbamatfungizide, Thiocarbamatherbizide, Thiocarbonatherbizide, Thioharnstoffacarizide, Thioharnstoffherbizide, Thioharnstoff-Rodentizide, Thiophenfungizide, Triazinfungizide, Triazinherbizide, Triazinonherbizide, Triazinylsulfonylharnstoffherbizide, Triazolfungizide, Triazolherbizide, Triazolonherbizide, Triazolopyrimidinherbizide, Triazolorganothiophosphatinsektizide, Uracilherbizide, Valinamidfungizide, Wachstumsinhibitoren, Wachstumsstimulatoren, Wachstumsverzögerer, Xylylalaninfungizide.

Das Pestizid zur erfindungsgemäßen Verwendung ist insbesondere unter Fungiziden (e1), Herbiziden (e2) and Insektiziden (e3) ausgewählt.

Fungizide umfassen beispielsweise aliphatische Stickstofffungizide, wie Butylamin, Cymoxanil, Dodicin, Dodine, Guazatine, Iminoctadine; Amidfungizide, wie Carpropamid, Chloraniformethan, Cyflufenamid, Diclocymet, Ethaboxam, Fenoxanil, Flumetover, Furametpyr, Mandipropamid, Penthiopyrad, Prochloraz, Chinazamid, Silthiofam, Triforine; insbesondere Acylaminosäurefungizide, wie Benalaxyl, Benalaxyl-M, Furalaxyl, Metalaxyl, Metalaxyl-M, Pefurazoate; Anilidfungizide, wie Benalaxyl, Benalaxyl-M, Boscalid, Carboxin, Fenhexamid, Metalaxyl, Metalaxyl-M, Metsulfovax, Ofurace, Oxadixyl, Oxycarboxin, Pyracarbolid, Thifluzamide, Tiadinil; insbesondere Benzanilidfungizide, wie Benodanil, Flutolanil, Mebenil, Mepronil, Salicylanilide, Tecloftalam; Furanilidfungizide, wie Fenfuram, Furalaxyl, Furcarbanil, Methfuroxam; und Sulfonanilidfungizide, wie Flusulfamide; Benzamidfungizide, wie Benzohydroxamsäure, Fluopicolide, Tioxymid, Trichlamide, Zarilamid, Zoxamide; Furamidfungizide, wie Cyclafuramid, Furmecyclox; Phenylsulfamidfungizide, wie Dichlofluanid, Tolylfluanid; Sulfonamidfungizide, wie Cyazofamid; und Valinamidfungizide, wie Benthiavalicarb, Iprovalicarb; AntibiotikaFungizide, wie Aureofungin, Blasticidin-S, Cycloheximide, Griseofulvin, Kasugamycin, Natamycin, Polyoxins, Polyoxorim, Streptomycin, Validamycin; insbesondere Strobilurinfungizide, wie Azoxystrobin, Dimoxystrobin, Fluoxastrobin, Kresoxim-Methyl, Metominostrobin, Orysastrobin, Picoxystrobin, Pyraclostrobin, Trifloxystrobin; aromatische Fungizide, wie Biphenyl, Chlordinitronaphthalen, Chloroneb, Chlorothalonil, Cresol, Dicloran, Chintozene, Tecnazene; Benzimidazolfungizide, wie Benomyl, Carbendazim, Chlorfenazol, Cypendazol, Debacarb, Fuberidazol, Mecarbinzid, Rabenzazol, Thiabendazole; Benzimidazolprecursorfungizide, wie Furophanate, Thiophanate, Thiophanat-Methyl; Benzothiazolfungizide, wie Bentaluron, Chlobenthiazon, TCMTB; Brückendiphenylfungizide, wie Bithionol, Dichlorphen, Diphenylamine; Carbamatfungizide, wie Benthiavalicarb, Furophanat, Iprovalicarb, Propamocarb, Thiophanat, Thiophanat-Methyl; insbesondere Benzimidazolylcarbamatfungizide, wie Benomyl, Carbendazim, Cypendazol, Debacarb, Mecarbinzid; und Carbanilatfungizide, wie Diethofencarb; Conazolfungizide; insbesondere Imidazole, wie Climbazol, Clotrimazol, Imazalil, Oxpoconazol, Prochloraz, Triflumizole; und Triazole, wie Azaconazol, Bromuconazol, Cyproconazol, Diclobutrazol, Difenoconazol, Diniconazol, Diniconazol-M, Epoxiconazol, Etaconazol, Fenbuconazol, Fluquinconazol, Flusilazol, Flutriafol, Furconazol, Furconazol-Cis, Hexaconazol, Imibenconazol, Ipconazol, Metconazol, Myclobutanil, Penconazol, Propiconazol, Prothioconazol, Chinconazol, Simeconazol, Tebuconazol, Tetraconazol, Triadimefon, Triadimenol, Triticonazol, Uniconazol, Uniconazol-P; Kupferfungizide, wie Bordeauxmischung, Burgundermischung, Cheshuntmischung, Kupferazetat, Kupferkarbonat, Kupferhydroxyd, Kupfernaphtenat, Kupferroleat, Kupferoxychlorid, Kupfersulfat, Kupferzinkchromat, Kupferoxyd, Mancopper, Cufraneb, Cuprobam, Oxinecopper; Dicarboximidfungizide, wie Famoxadon, Fluoroimide; insbesondere Dichlorphenyldicarboximidfungizide, wie Chlozolinate, Dichlozoline, Iprodion, Isovaledion, Myclozolin, Procymidon, Vinclozolin; und Phthalimidfungizide, wie Captafol, Captan, Ditalimfos, Folpet, Thiochlorfenphim; Dinitrophenolfungizide, wie Binapacryl, Dinobuton, Dinocap, Dinocap-4, Dinocap-6, Dinocton, Dinopenton, Dinosulfon, Dinoterbon, DNOC; Dithiocarbamatfungizide, wie Azithiram, Carbamorph, Cufraneb, Cuprobam, Disulfiram, Ferbam, Metam, Nabam, Tecoram, Thiram, Ziram; insbesondere Cyclodithiocarbamatfungizide, wie Dazomet, Etem, Milneb; und polymere Dithiocarbamatfungizide, wie Mancopper, Mancozeb, Maneb, Metiram, Polycarbamate, Propineb, Zineb; Imidazolfungizide, wie Cyazofamid, Fenamidon, Fenapanil, Glyodin, Iprodion, Isovaledion, Pefurazoate, Triazoxide; anorganische Fungizide, wie Kaliumazid, Natriumazid, Schwefel; Morpholinfungizide, wie z.B. Aldimorph, Benzamorph, Carbamorph, Dimethomorph, Dodemorph, Fenpropimorph, Flumorph, Tridemorph; Organophosphorfungizide, wie Ampropylfos, Ditalimfos, Edifenphos, Fosetyl, Hexylthiofos, Iprobenfos, Phosdiphen, Pyrazophos, Tolclofos-Methyl, Triamiphos; Organotinfungizide, wie Decafentin, Fentin, Tributyltinoxide; Oxathünfungizide, wie Carboxin, Oxycarboxin; Oxazolfungizide, wie Chlozolinate, Dichlozoline, Drazoxolon, Famoxadon, Hymexazol, Metazoxolon, Myclozolin, Oxadixyl, Vinclozolin; Polysulfidfungizide, wie Bariumpolysulfid, Kaliumpolysulfid, Natriumpolysulfid; Pyrazolfungizide, wie Furametpyr, Penthiopyrad; Pyridinfungizide, wie Boscalid, Buthiobate, Dipyrithion, Fluazinam, Fluopicolide, Pyridinitril, Pyrifenox, Pyroxychlor, Pyroxyfur; Pyrimidinfungizide, wie Bupirimate, Cyprodinil, Diflumetorim, Dimethirimol, Ethirimol, Fenarimol, Ferimzon, Mepanipyrim, Nuarimol, Pyrimethanil, Triarimol; Pyrrolfungizide, wie Fenpiclonil, Fludioxonil, Fluoroimide; Chinolinfungizide, wie Ethoxyquin, Halacrinate, 8-Hydroxyquinolinesulfate, Chinacetol, Chinoxyfen; Chinonfungizide, wie Benquinox, Chloranil, Dichlon, Dithianon; Chinoxalinfungizide, wie Chinomethionat, Chlorquinox, Thioquinox; Thiazolfungizide, wie Ethaboxam, Etridiazol, Metsulfovax, Octhilinon, Thiabendazol, Thiadifluor, Thifluzamide; Thiocarbamatfungizide, wie Methasulfocarb, Prothiocarb; Thiophenfungizide, wie Ethaboxam, Silthiofam; Triazinfungizide, wie Anilazin; Triazolfungizide, wie Bitertanol, Fluotrimazol, Triazbutil; Harnstofffungizide, wie Bentaluron, Pencycuron, Chinazamid; unklassifzierte Fungizide, wie Acibenzolar, Acypetacs, Allylalkohol, Benzalkoniumchlorid, Benzamacril, Bethoxazin, Carvon, DBCP, Dehydroessigsäure, Diclomezine, Diethylpyrocarbonate, Fenaminosulf, Fenitropan, Fenpropidin, Formaldehyde, Furfural, Hexachlorbutadiene, Isoprothiolan, Methylisothiocyanate, Metrafenon, Nitrostyrene, Nitrothallsopropyl, OCH, Phthalid, Piperalin, Probenazol, Proquinazid, Pyroquilon, Natriumorthophenylphenoxid, Spiroxamine, Sultropen, Thicyofen, Tricyclazol, Zinknaphthenat.

Gemäß einer besonderen Ausführungsform der Erfindung umfassen Fungizide (e1):

- Strobilurine, wie z. B. Azoxystrobin, Dimoxystrobin, Enestroburin, Fluoxastrobin, Kresoxim-methyl, Metominostrobin, Picoxystrobin, Pyraclostrobin, Trifloxystrobin, Orysastrobin, (2-Chlor-5-[1-(3-methyl-benzyloxyimino)-ethyl]-benzyl)-carbaminsäuremethylester, (2-Chlor-5-[1-(6-methyl-pyridin-2-ylmethoxyimino)-ethyl]-benzyl)-carbaminsäuremethylester, 2-(ortho-(2,5-Dimethylphenyl-oxymethyl)phenyl)-3-methoxy-acrylsäuremethylester;

Carbonsäureamide

- Carbonsäureanilide, wie z. B. Benalaxyl, Benodanil, Boscalid, Carboxin, Mepronil, Fenfuram, Fenhexamid, Flutolanil, Furametpyr, Metalaxyl, Ofurace, Oxadixyl, Oxycarboxin, Penthiopyrad, Thifluzamide, Tiadinil, 4-Difluormethyl-2-methyl-thiazol-5-carbonsäure-(4'-brom-biphenyl-2-yl)-amid, 4-Difluormethyl-2-methyl-thiazol-5-carbonsäure-(4'-trifluormethyl-biphenyl-2-yl)-amid, 4-Difluormethyl-2-methyl-thiazol-5-carbonsäure-(4'-chlor-3'-fluor-biphenyl-2-yl)-amid, 3-Difluormethyl-1-methyl-pyrazol-4-carbonsäure-(3',4'-dichlor-4-fluorbiphenyl-2-yl)-amid, 3-Difluormethyl-1-methyl-pyrazol-4-carbonsäure-(3',4'-di-chlor-5-fluor-biphenyl-2-yl)-amid, 3,4-Dichlor-isothiazol-5-carbonsäure-(2-cyano-phenyl)-amid. Geeignete Carbonsäureanilide sind weiterhin Benaxalyl-M, Bixafen, Isotianil, Kiralaxyl, Tecloftalam, 2-Amino-4-methylthiazol-5-carbonsäureanilid, 2-Chlor-N-(1,1,3-trimethylindan-4-ylnicotinamid, N-(3',4'-Dichlor-5-fluorbiphenyl-2-yl)-3-difluormethyl-1-methyl-1 H-pyrazol-4-carbonsäureamid, N-(3',4'-Dichlor-5-fluorbiphenyl-2-yl)-3-trifluormethyl-1-methyl-1 H-pyrazol-4-carbonsäureamid, 5-Fluor-1,3-dimethyl-1 H-pyrazol-4-carbonsäure-[2-(1,3-dimethylbutyl)phenyl]amid, N-(4'-Chlor-3',5-difluorbiphenyl-2-yl)-3-difluormethyl-1-methyl-1 H-pyrazol-4-carbonsäureamid, N-(4'-Chlor-3',5-difluorbiphenyl-2-yl)-3-trifluormethyl-1-methyl-1 H-pyrazol-4-carbonsäureamid, N-(3',5-Difluor-4'-methylbiphenyl-2-yl)-3-difluormethyl-1-methyl-1H-pyrazol-4-carbonsäureamid, N-(3',5-Difluor-4'-methylbiphenyl-2-yl)-3-trifluormethyl-1-methyl-1 H-pyrazol-4-carbonsäureamid, N-(2-Bicyclopropyl-2-ylphenyl)-3-difluormethyl-1-methyl-1 H-pyrazol-4-carbonsäureamid, N-(cis-2-Bicyclopropyl-2-ylphenyl)-3-difluormethyl-1-methyl-1 H-pyrazol-4-carbonsäureamid und N-(trans-2-Bicyclopropyl-2-ylphenyl)-3-difluormethyl-1-methyl-1H-pyrazol-4-carbonsäureamid;
- Carbonsäuremorpholide, wie z. B. Dimethomorph, Flumorph;
- Benzoesäureamide, wie z. B. Flumetover, Fluopicolide (Picobenzamid), Zoxamide. Geeignet ist auch N-(3-Ethyl-3,5,5-trimethylcyclohexyl)-3-formuylamino-2-hydroxybenazmid;
- Sonstige Carbonsäureamide, wie z. B. Carpropamid, Diclocymet, Mandipropamid, N-(2-(4-[3-(4-Chlor-phenyl)-prop-2-inyloxy]-3-methoxy-phenyl)-ethyl)-2-methylsulfonylamino-3-methyl-butyramid, N-(2-(4-[3-(4-Chlor-phenyl)-prop-2-inyloxy]-3-methoxy-phenyl)-ethyl)-2-ethylsulfonylamino-3-methyl-butyramid. Geeignet ist weiterhin Oxytetracyclin, Silthiofam, N-(6-Methoxypyridin-3-yl)cyclopropancarbonsäureamid;

Azole

- Triazole, wie z. B. Bitertanol, Bromuconazole, Cyproconazole, Difenoconazole, Diniconazole, Enilconazole, Epoxiconazole, Fenbuconazole, Flusilazole, Fluquinconazole, Flutriafol, Hexaconazol, Imibenconazole, Ipconazole, Metconazol, Myclobutanil, Penconazole, Propiconazole, Prothioconazole, Simeconazole, Tebuconazole, Tetraconazole, Triadimenol, Triadimefon, Triticonazole;
- Imidazole, wie z. B. Cyazofamid, Imazalil, Pefurazoate, Prochloraz, Triflumizole;
- Benzimidazole, wie z. B. Benomyl, Carbendazim, Fuberidazole, Thiabendazole;
und sonstige, wie Ethaboxam, Etridiazole, Hymexazole;

Stickstoffhaltige Heterocyclylverbindungen

- Pyridine, wie z. B. Fluazinam, Pyrifenox, 3-[5-(4-Chlor-phenyl)-2,3-dimethylisoxazolidin-3-yl]-pyridin;
- Pyrimidine, wie z. B. Bupirimate, Cyprodinil, Ferimzone, Fenarimol, Mepanipyrim, Nuarimol, Pyrimethanil;
- Piperazine, wie Triforine;
- Pyrrole, wie Fludioxonil, Fenpiclonil;
- Morpholine, wie Aldimorph, Dodemorph, Fenpropimorph, Tridemorph;
- Dicarboximide, wie Iprodione, Procymidone, Vinclozolin;
- Sonstige, wie Acibenzolar-S-methyl, Anilazin, Captan, Captafol, Dazomet, Diclomezine, Fenoxanil, Folpet, Fenpropidin, Famoxadone, Fenamidone, Octhilinone, Probenazole, Proquinazid, Pyroquilon, Quinoxyfen, Tricyclazole, 6-Aryl-[1,2,4]triazolo[1,5-a]pyrimidinen, beispielsweise Verbindungen der nachfolgend definierten Formel (IV), z. B. 5-Chlor-7-(4-methyl-piperidin-1-yl)-6-(2,4,6-trifluorphenyl)-[1,2,4]triazolo[1,5-a]pyrimidin, 2-Butoxy-6-iodo-3-propyl-chromen-4-on,

3-(3-Brom-6-fluoro-2-methyl-indol-1-sulfonyl)-[1,2,4]triazol-1-sulfonsäuredimethylamid;
Carbamate und Dithiocarbamate

- Dithiocarbamate, wie Ferbam, Mancozeb, Maneb, Metiram, Metam, Propineb, Thiram, Zineb, Ziram;
- Carbamate, wie Diethofencarb, Flubenthiavalicarb, Iprovalicarb, Propamocarb, 3-(4-Chlor-phenyl)-3-(2-isopropoxycarbonylamino-3-methyl-butyrylamino)-propionsäuremethylester, N-(1-(1-(4-cyanophenyl)ethylsulfonyl)-but-2-yl) carbaminsäure-(4-fluorphenyl)ester;

Sonstige Fungizide

- Guanidine, wie Dodine, Iminoctadine, Guazatine;
- Antibiotika, wie Kasugamycin, Polyoxine, Streptomycin, Validamycin A;
- Organometallverbindungen, wie Fentin Salze;
- Schwefelhaltige Heterocyclylverbindungen, wie Isoprothiolane, Dithianon;
- Organophosphorverbindungen, wie Edifenphos, Fosetyl, Fosetylaluminium, Iprobenfos, Pyrazophos, Tolclofos-methyl, Phosphorige Säure und ihre Salze;
- Organochlorverbindungen, wie Thiophanat Methyl, Chlorothalonil, Dichlofluanid, Tolylfluanid, Flusulfamide, Phthalide, Hexachlorbenzol, Pencycuron, Quintozene;
- Nitrophenylderivate, wie Binapacryl, Dinocap, Dinobuton;
- Sonstige, wie z. B. Spiroxamine, Cyflufenamid, Cymoxanil, Metrafenon.

Herbizide (e2) umfassen zum Beispiel Amidherbizide, wie Allidochlor, Beflubutamid, Benzadox, Benzipram, Bromobutide, Cafenstrole, CDEA, Chlorthiamid, Cyprazole, Dimethenamid, Dimethenamid-P, Diphenamid, Epronaz, Etnipromid, Fentrazamide, Flupoxam, Fomesafen, Halosafen, Isocarbamid, Isoxaben, Napropamide, Naptalam, Pethoxamid, Propyzamide, Chinonamid, Tebutam; insbesondere Anilidherbizide, wie Chloranocryl, Cisanilide, Clomeprop, Cypromid, Diflufenican, Etobenzanid, Fenasulam, Flufenacet, Flufenican, Mefenacet, Mefluidide, Metamifop, Monalide, Naproanilide, Pentanochlor, Picolinafen, Propanil; insbesondere Arylalaninherbizide, wie Benzoylprop, Flamprop, Flamprop-M; Chloracetanilidherbizide, wie Acetochlor, Alachlor, Butachlor, Butenachlor, Delachlor, Diethatyl, Dimethachlor, Metazachlor, Metolachlor, S-Metolachlor, Pretilachlor, Propachlor, Propisochlor, Prynachlor, Terbuchlor, Thenylchlor, Xylachlor; und Sulfonanilidherbizide, wie Benzofluor, Cloransulam, Diclosulam, Florasulam, Flumetsulam, Metosulam, Perfluidon, Pyrimisulfan, Profluazol; und Sulfonamidherbizide, wie Asulam, Carbasulam, Fenasulam, Oryzalin, Penoxsulam; Antibioticherbizide, wie Bilanafos; Aromatensäurenherbizide; insbesondere Benzoatherbizide, wie Chloramben,

Dicamba, 2, 3, 6-TBA, Tricamba; insbesondere Pyrimidinyloxybenzoatherbizide, wie Bispyribac, Pyriminobac; und Pyrimidinylthiobenzoatherbizide, wie Pyrithiobac; Phthalatherbizide, wie Chlorthal; Picolinatherbizide, wie Aminopyralid, Clopyralid, Picloram; und Chinolinecarboxylatherbizide, wie Chinclorac, Chinmerac; Arsenherbizide, wie Cacodylat, CMA, DSMA, Hexaflurate, MAA, MAMA, MSMA, Kaliumarsenit, Natriumarsenit; Benzoylcyclohexandionherbizide, wie Mesotrion, Sulcotrion; Benzofuranylalkylsulfonatherbizide, wie Benfuresat, Ethofumesat; Carbamatherbizide, wie Asulam, Carboxazol, Chlorprocarb, Dichlormat, Fenasulam, Karbutilate, Terbucarb; Carbanilatherbizide, wie Barban, BCPC, Carbasulam, Carbetamid, CEPC, Chlorbufam, Chlorpropham, CPPC, Desmedipham, Phenisopham, Phenmedipham, Phenmedipham-Ethyl, Propham, Swep; Cyclohexenoximherbizide, wie Alloxydim, Butroxydim, Clethodim, Cloproxydim, Cycloxydim, Profoxydim, Sethoxydim, Tepraloxydim, Tralkoxydim; Cyclopropylisoxazolherbizide, wie Isoxachlortol, Isoxaflutol; Dicarboximidherbizide, wie Benzfendizon, Cinidon-Ethyl, Flumezin, Flumiclorac, Flumioxazin, Flumipropyn; Dinitroanilinherbizide, wie Benfluralin, Butralin, Dinitramine, Ethalfluralin, Fluchloralin, Isopropalin, Methalpropalin, Nitralin, Oryzalin, Pendimethalin, Prodiamine, Profluralin, Trifluralin; Dinitrophenolherbizide, wie Dinofenat, Dinoprop, Dinosam, Dinoseb, Dinoterb, DNOC, Etinofen, Medinoterb; Diphenyletherherbizide, wie Ethoxyfen; insbesondere Nitrophenyletherherbizide, wie Acifluorfen, Aclonifen, Bifenox, Chlomethoxyfen, Chlornitrofen, Etnipromid, Fluorodifen, Fluoroglycofen, Fluoronitrofen, Fomesafen, Furyloxyfen, Halosafen, Lactofen, Nitrofen, Nitrofluorfen, Oxyfluorfen; Dithiocarbamatherbizide, wie Dazomet, Metam; halogenaliphatische Herbizide, wie Alorac, Chloropon, Dalapon, Flupropanat, Hexachloraceton, Chloressigsäure, SMA, TCA; Imidazolinonherbizide, wie Imazamethabenz, Imazamox, Imazapic, Imazapyr, Imazaquin, Imazethapyr; anorganische Herbizide, wie Ammoniumsulfamate, Calciumchlorat, Kupfersulfat, Eisensulfat, Kaliumazid, Zyankali, Natriumazid, Natriumchlorat, Schwefelsäure; Nitrilherbizide, wie Bromobonil, Bromoxynil, Chloroxynil, Dichlobenil, Iodobonil, Ioxynil, Pyraclonil; Organophosphorherbizide, wie Amiprofos-Methyl, Anilofos, Bensulide, Bilanafos, Butamifos, 2,4-DEP, DMPA, EBEP, Fosamin, Glufosinat, Glyphosat, Piperophos; Phenoxyherbizide, wie Bromofenoxim, Clomeprop, 2,4-DEB, 2,4-DEP, Difenopenten, Disul, Erbon, Etnipromid, Fenteracol, Trifopsime; insbesondere Phenoxyessigsäureherbizide, wie 4-CPA, 2,4-D, 3,4-DA, MCPA, MCPA-Thioethyl; Phenoxybuttersäureherbizide, wie 4-CPB, 2,4-DB, 3,4-DB, MCPB, 2,4,5-TB; und Phenoxypropionsäureherbizide, wie Cloprop, 4-CPP, Dichlorprop, Dichlorprop-P, 3, 4-DP, Fenoprop, Mecoprop, Mecoprop-P; insbesondere Aryloxyphenoxypropionsäureherbizide, wie Chlorazifop, Clodinafop, Clofop, Cyhalofop, Diclofop, Fenoxaprop, Fenoxaprop-P, Fenthiaprop, Fluazifop, Fluazifop-P, Haloxyfop, Haloxyfop-P, Isoxapyrifop, Metamifop, Propaquizafop, Quizalofop, Quizalofop-P, Trifop; Phenylenediaminherbizide, wie Dinitramine, Prodiamine; Phenylpyrazolylketonherbizide, wie Benzofenap, Pyrazolynate, Pyrazoxyfen, Topramezone; Pyrazolylphenylherbizide, wie Fluazolate, Pyraflufen; Pyridazinherbizide, wie Credazin, Pyridafol, Pyridat; Pyridazinonherbizide, wie Brompyrazon, Chloridazon, Dimidazon, Flufenpyr, Metflurazon, Norflurazon, Oxapyrazon, Pydanon; Pyridinherbizide, wie Aminopyralid, Cliodinate, Clopyralid, Dithiopyr, Fluroxypyr, Haloxydine, Picloram, Picolinafen, Pyriclor, Thiazopyr, Triclopyr; Pyrimidinediaminherbizide, wie Iprymidam, Tioclorim; quarternäre Ammoniumherbizide, wie Cyperquat, Diethamquat, Difenzoquat, Diquat, Morfamquat, Paraquat; Thiocarbamatherbizide, wie Butylate, Cycloate, Di-Allate, EPTC, Esprocarb, Ethiolate, Isopolinate, Methiobencarb, Molinate, Orbencarb, Pebulate, Prosulfocarb, Pyributicarb, Sulfallate, Thiobencarb, Tiocarbazil, Tri-Allate, Vernolate; Thiocarbonatherbizide, wie Dimexano, EXD, Proxan; Thioharnstoffherbizide, wie Methiuron; Triazinherbizide, wie Dipropetryn, Triaziflam, Trihydroxytriazine; insbesondere Chlortriazinherbizide, wie Atrazine, Chlorazine, Cyanazine, Cyprazine, Eglinazine, Ipazine, Mesoprazine, Procyazine, Proglinazine, Propazine, Sebuthylazine, Simazine, Terbuthylazine, Trietazine; Methoxytriazinherbizide, wie Atraton, Methometon, Prometon, Secbumeton, Simeton, Terbumeton; und Methylthiotriazinherbizide, wie Ametryn, Aziprotryne, Cyanatryn, Desmetryn, Dimethametryn, Methoprotryne, Prometryn, Simetryn, Terbutryn; Triazinonherbizide, wie Ametridion, Amibuzin, Hexazinon, Isomethiozin, Metamitron, Metribuzin; Triazolherbizide, wie Amitrole, Cafenstrol, Epronaz, Flupoxam; Triazolonherbizide, wie Amicarbazon, Carfentrazon, Flucarbazon, Propoxycarbazon, Sulfentrazone; Triazolopyrimidinherbizide, wie Cloransulam, Diclosulam, Florasulam, Flumetsulam, Metosulam, Penoxsulam; Uracilherbizide, wie Butafenacil, Bromacil, Flupropacil, Isocil, Lenacil, Terbacil; Harnstoffherbizide, wie Benzthiazuron, Cumyluron, Cycluron, Dichloralharnstoff, Diflufenzopyr, Isonoruron, Isouron, Methabenzthiazuron, Monisouron, Noruron; insbesondere Phenylharnstoffherbizide, wie Anisuron, Buturon, Chlorbromuron, Chloreturon, Chlorotoluron, Chloroxuron, Daimuron, Difenoxuron, Dimefuron, Diuron, Fenuron, Fluometuron, Fluothiuron, Isoproturon, Linuron, Methiuron, Methyldymron, Metobenzuron, Metobromuron, Metoxuron, Monolinuron, Monuron, Neburon, Parafluron, Phenobenzuron, Siduron, Tetrafluron, Thidiazuron; Sulfonylharnstoffherbizide; insbesondere Pyrimidinylsulfonylharnstoffherbizide, wie Amidosulfuron, Azimsulfuron, Bensulfuron, Chlorimuron, Cyclosulfamuron, Ethoxysulfuron, Flazasulfuron, Flucetosulfuron, Flupyrsulfuron, Foramsulfuron, Halosulfuron, Imazosulfuron, Mesosulfuron, Nicosulfuron, Orthosulfamuron, Oxasulfuron, Primisulfuron, Pyrazosulfuron, Rimsulfuron, Sulfometuron, Sulfosulfuron, Trifloxysulfuron; und Triazinylsulfonylharnstoffherbizide, wie Chlorsulfuron, Cinosulfuron, Ethametsulfuron, Iodosulfuron, Metsulfuron, Prosulfuron, Thifensulfuron, Triasulfuron, Tribenuron, Triflusulfuron, Tritosulfuron; und Thiadiazolylharnstoffherbizide, wie Buthiuron, Ethidimuron, Tebuthiuron, Thiazafluron, Thidiazuron; und sonstige Herbizide, wie Acrolein, Allylalkohol, Azafenidin, Benazolin, Bentazon, Benzobicyclon, Buthidazole, Calciumcyanamid, Cambendichlor, Chlorfenac, Chlorfenprop, Chlorflurazole, Chlorflurenol, Cinmethylin, Clomazon, CPMF, Cresol, Orthodichlorbenzol, Dimepiperate, Endothal, Fluoromidine, Fluridon, Flurochloridon, Flurtamon, Fluthiacet, Indanofan, Methazole, Methylisothiocyanate, Nipyraclofen, OCH, Oxadiargyl, Oxadiazon, Oxaziclomefon, Pentoxazon, Pinoxaden, Prosulfalin, Pyribenzoxim, Pyriftalid, Chinoclamine, Rhodethanil, Sulglycapin, Thidiazimin, Tridiphane, Trimeturon, Tripropindan, Tritac.

Gemäß einer besonderen Ausführungsform der Erfindung umfassen Herbizide (e2):

- 1,3,4-Thiadiazole wie Buthidazole und Cyprazole;
- Amide wie Allidochlor, Benzoylpropethyl, Bromobutide, Chlorthiamid, Dimepiperate, Dimethenamid, Diphenamid, Etobenzanid, Flampropmethyl, Fosamin, Isoxaben, Metazachlor, Monalide, Naptalame, Pronamid, Propanil;
- Aminophosphorsäuren wie Bilanafos, Buminafos, Glufosinateammonium, Glyphosate, Sulfosate;
- Aminotriazole wie Amitrol, Anilide wie Anilofos, Mefenacet;
- Anilide wie Anilofos, Mefenacet;
- Aryloxyalkansäure wie 2,4-D, 2,4-DB, Clomeprop, Dichlorprop, Dichlorprop-P, Fenoprop, Fluroxypyr, MCPA, MCPB, Mecoprop, Mecoprop-P, Napropamide, Napro-panilide, Triclopyr;
- Benzoesäuren wie Chloramben, Dicamba;
- Benzothiadiazinone wie Bentazon;
- Bleacher wie Clomazone, Diflufenican, Fluorochloridone, Flupoxam, Fluridone, Pyrazolate, Sulcotrione;
- Carbamate wie Carbetamid, Chlorbufam, Chlorpropham, Desmedipham, Phenmedipham, Vernolate;
- Chinolinsäuren wie Quinclorac, Quinmerac;
- Dichlorpropionsäuren wie Dalapon;
- Dihydrobenzofurane wie Ethofumesate;
- Dihydrofuran-3-one wie Flurtamone;
- Dinitroaniline wie Benefin, Butralin, Dinitramin, Ethalfluralin, Fluchloralin, Isopropalin, Nitralin, Oryzalin, Pendimethalin, Prodiamine, Profluralin, Trifluralin,
- Dinitrophenole wie Bromofenoxim, Dinoseb, Dinoseb-acetat, Dinoterb, DNOC, Medinoterb-Acetat;
- Diphenylether wie Acifluorfen-sodium, Aclonifen, Bifenox, Chlornitrofen, Difenoxuron, Ethoxyfen, Fluorodifen, Fluoroglycofen-ethyl, Fomesafen, Furyloxyfen, Lactofen, Nitrofen, Nitrofluorfen, Oxyfluorfen;
- Dipyridyle wie Cyperquat, Difenzoquat-methylsulfat, Diquat, Paraquat-dichlorid;
- Imidazole wie Isocarbamid;
- Imidazolinone wie Imazamethapyr, Imazapyr, Imazaquin, Imazamethabenzmethyl, Imazethapyr, Imazapic, Imazamox;
- Oxadiazole wie Methazole, Oxadiargyl, Oxadiazon;
- Oxirane wie Tridiphane;
- Phenole wie Bromoxynil, Ioxynil;
- Phenoxyphenoxypropionsäureester wie Clodinafop, Cyhalofop-butyl, Diclofopmethyl, Fenoxaprop-ethyl, Fenoxaprop-P-ethyl, Fenthiapropethyl, Fluazifopbutyl, Fluazifop-P-butyl, Haloxyfop-ethoxy-ethyl, Haloxyfop-methyl, Haloxyfop-P-methyl, Isoxapyrifop, Propaquizafop, Quizalofop-ethyl, Quizalofop-P-ethyl, Quizalofop-tefuryl;
- Phenylessigsäuren wie Chlorfenac;
- Phenylpropionsäuren wie Chlorphenprop-methyl;
- ppi-Wirkstoffe wie Benzofenap, Flumiclorac-pentyl, Flumioxazin, Flumipropyn, Flupropacil, Pyrazoxyfen, Sulfentrazone, Thidiazimin;
- Pyrazole wie Nipyraclofen;
- Pyridazine wie Chloridazon, Maleic hydrazide, Norflurazon, Pyridate;
- Pyridincarbonsäuren wie Clopyralid, Dithiopyr, Picloram, Thiazopyr;
- Pyrimidylether wie Pyrithiobacsäure, Pyrithiobac-sodium, KIH-2023, KIH-6127;
- Sulfonamide wie Flumetsulam, Metosulam;
- Triazolcarboxamide wie Triazofenamid;
- Uracile wie Bromacil, Lenacil, Terbacil;
- ferner Benazolin, Benfuresate, Bensulide, Benzofluor, Bentazon, Butamifos, Cafenstrole, Chlorthal-dimethyl, Cinmethylin, Dichlobenil, Endothall, Fluorbentranil, Mefluidide, Perfluidone, Piperophos, Topramezone und Prohexadion-Calcium;
- Sulfonylharnstoffe wie Amidosulfuron, Azimsulfuron, Bensulfuron-methyl, Chlorimuron-ethyl, Chlorsulfuron, Cinosulfuron, Cyclosulfamuron, Ethametsulfuronmethyl, Flazasulfuron, Halosulfuron-methyl, Imazosulfuron, Metsulfuron-methyl, Nicosulfuron, Primisulfuron, Prosulfuron, Pyrazosulfuron-ethyl, Rimsulfuron, Sulfometuron-methyl, Thifensulfuron-methyl, Triasulfuron, Tribenuron-methyl, Triflusulfuron-methyl, Tritosulfuron;
- Pflanzenschutz-Wirkstoffe vom Cyclohexenon-Typ wie Alloxydim, Clethodim, Cloproxydim, Cycloxydim, Sethoxydim und Tralkoxydim. Ganz besonders bevorzugte herbizide Wirkstoffe vom Cyclohexenon-Typ sind: Tepraloxydim (vgl. AGROW, Nr. 243, 3.11.95, Seite 21, Cycloxydim) und 2-(1-[2-{4-Chlorphenoxy}propyl-oxyimino]butyl)-3-hydroxy-5-(2H-tetrahydrothiopyran-3-yl)-2-cyclohexen-1-on und vom Sulfonylharnstoff-Typ: N-(((4-methoxy-6-[trifluormethyl]-1,3,5-triazin-2-yl)amino)carbo-nyl)-2-(trifluormethyl)-benzolsulfonamid.

Insektizide (e3) umfassen zum Beispiel Antibiotika-Insektizide, wie Allosamidin, Thuringiensin; insbesondere macrocyclische Lactoninsektizide, wie Spinosad; insbesondere Vermectininsektizide, wie Abamectin, Doramectin, Emamectin, Eprinomectin, Ivermectin, Selamectin; und Milbemycininsektizide, wie Lepimectin, Milbemectin, Milbemycinoxime, Moxidectin; Arseninsektizide, wie Calciumarsenat, Kupferacetarsenit, Kupferarsenat, Bleiarsenat, Kaliumarsenit, Natriumarsenit; pflanzliche Insektizide, wie Anabasin, Azadirachtin, D-Limonen, Nicotin, Pyrethrine, Cinerin E, Cinerin I, Cinerin II, Jasmolin I, Jasmolin II, Pyrethrin I, Pyrethrin II, Quassia, Rotenon, Ryania, Sabadilla; Carbamatinsektizide, wie Bendiocarb, Carbaryl; insbesondere Benzofuranylmethylcarbamatinsektizide, wie Benfuracarb, Carbofuran, Carbosulfan, Decarbofuran, Furathiocarb; Dimethylcarbamatinsektizide, wie Dimetan, Dimetilan, Hyquincarb, Pirimicarb; Oximcarbamatinsektizide, wie Alanycarb, Aldicarb, Aldoxycarb, Butocarboxim, Butoxycarboxim, Methomyl, Nitrilacarb, Oxamyl, Tazimcarb, Thiocarboxime, Thiodicarb, Thiofanox; und Phenylmethylcarbamatinsektizide, wie Allyxycarb, Aminocarb, Bufencarb, Butacarb, Carbanolate, Cloethocarb, Dicresyl, Dioxacarb, EMPC, Ethiofencarb, Fenethacarb, Fenobucarb, Isoprocarb, Methiocarb, Metolcarb, Mexacarbate, Promacyl, Promecarb, Propoxur, Trimethacarb, XMC, Xylylcarb; Dinitrophenolinsektizide, wie Dinex, Dinoprop, Dinosam, DNOC; Insektenwachstumsregulatoren; insbesondere Chitinsyntheseinhibitoren, wie Bistrifluron, Buprofezin, Chlorfluazuron, Cyromazine, Diflubenzuron, Flucycloxuron, Flufenoxuron, Hexaflumuron, Lufenuron, Novaluron, Noviflumuron, Penfluron, Teflubenzuron, Triflumuron; Juvenilhormonmimetika, wie Epofenonan, Fenoxycarb, Hydropren, Kinopren, Methopren, Pyriproxyfen, Tripren; Juvenilhormone, wie Juvenilhormon I, II und III; Häutungshormonagonisten, wie Chromafenozid, Halofenozid, Methoxyfenozid, Tebufenozid; Häutungshormone, wie A-Ecdyson, Ecdysteron; Häutungshemmer, wie Diofenolan; Precocene, wie Precocen I, II und III; und unklassifizierte Insektizide, wie Dicyclanil; Nereistoxinanaloga, wie Bensultap, Cartap, Thiocyclam, Thiosultap; Nicotinoidinsektizide, wie Flonicamid; insbesondere Nitroguanidininsektizide, wie Clothianidin, Dinotefuran, Imidacloprid, Thiamethoxam; Nitromethyleninsektizide, wie Nitenpyram, Nithiazine; und Pyridylmethylamininsektizide, wie Acetamiprid, Imidacloprid, Nitenpyram, Thiacloprid; Organochlorininsektizide, wie Isobenzan, Isodrin, Kelevan, Mirex; Organophosphorinsektizide; insbesondere Organophosphatinsektizide, wie Bromfenvinfos, Chlorfenvinphos, Crotoxyphos, Dichlorvos, Dicrotophos, Dimethylvinphos, Fospirate, Heptenophos, Methocrotophos, Mevinphos, Monocrotophos, Naled, Naftalofos, Phosphamidon, Propaphos, TEPP, Tetrachlorvinphos; Organothiophosphatinsektizide, wie Dioxabenzofos, Fosmethilan, Phenthoate; insbesondere aliphatische Organothiophosphatinsektizide, wie Acethion, Amiton, Cadusafos, Chlorethoxyfos, Chlormephos, Demephion, Demephion-O, Demephion-S, Demeton, Demeton-O, Demeton-S, Demeton-Methyl, Demeton-O-Methyl, Demeton-S-Methyl, Demeton-S-Methylsulphon, Disulfoton, Ethion, Ethoprophos, IPSP, Isothioat, Malathion, Methacrifos, Oxydemeton-Methyl, Oxydeprofos, Oxydisulfoton, Phorat, Sulfotep, Terbufos, Thiometon; insbesondere aliphatische Amidorganothiophosphatinsektizide, wie Amidithion, Cyanthoate, Dimethoate, Ethoat-Methyl, Formothion, Mecarbam, Omethoate, Prothoate, Sophamide, Vamidothion; und Oximorganothiophosphatinsektizide, wie Chlorphoxim, Phoxim, Phoxim-Methyl; Heterocyclische Organothiophosphatinsektizide, wie Azamethiphos, Coumaphos, Coumithoate, Dioxathion, Endothion, Menazon, Morphothion, Phosalon, Pyraclofos, Pyridaphenthion, Chinothion; besonders Benzothiopyranorganothiophosphatinsektizide, wie Dithicrofos, Thicrofos; Benzotriazinorganothiophosphatinsektizide, wie Azinphos-Ethyl, Azinphos-Methyl; Isoindolorganothiophosphatinsektizide, wie Dialifos, Phosmet; Isoxazolorganothiophosphatinsektizide, wie Isoxathion, Zolaprofos; Pyrazolopyrimidinorganothiophosphatinsektizide, wie Chlorprazophos, Pyrazophos; Pyridinorganothiophosphatinsektizide, wie Chlorpyrifos, Chlorpyrifos-Methyl; Pyrimidinorganothiophosphatinsektizide, wie Butathiofos, Diazinon, Etrimfos, Lirimfos, Pirimiphos-Ethyl, Pirimiphos-Methyl, Primidophos, Pyrimitate, Tebupirimfos; Chinoxalinorganothiophosphatinsektizide, wie Chinalphos, Chinalphos-Methyl; Thiadiazolorganothiophosphatinsektizide, wie Athidathion, Lythidathion, Methidathion, Prothidathion; und Triazoleorganothiophosphatinsektizide, wie Isazofos, Triazophos; und Phenylorganothiophosphatinsektizide, wie Azothoate, Bromophos, Bromophos-Ethyl, Carbophenothion, Chlorthiophos, Cyanophos, Cythioate, Dicapthon, Dichlofenthion, Etaphos, Famphur, Fenchlorphos, Fenitrothion, Fensulfothion, Fenthion, Fenthion-Ethyl, Heterophos, Jodfenphos, Mesulfenfos, Parathion, Parathion-Methyl, Phenkapton, Phosnichlor, Profenofos, Prothiofos, Sulprofos, Temephos, Trichlormetaphos-3, Trifenofos; Phosphonatinsektizide, wie Butonat, Trichlorfon; Phosphonothioatinsektizide, wie Mecarphon; insbesondere Phenylethylphosphonothioatinsektizide, wie Fonofos, Trichloronat; und Phenylphenylphosphonothioatinsektizide, wie Cyanofenphos, EPN, Leptophos; Phosphoramidatinsektizide, wie Crufomate, Fenamiphos, Fosthietan, Mephosfolan, Phosfolan, Pirimetaphos; Phosphoramidothioatinsektizide, wie Acephate, Isocarbophos, Isofenphos, Methamidophos, Propetamphos; und Phosphorodiamidinsektizide, wie Dimefox, Mazidox, Mipafox, Schradan; Oxadiazininsektizide, wie Indoxacarb; Phthalimidinsektizide, wie Dialifos, Phosmet, Tetramethrin; Pyrazolinsektizide, wie Acetoprol, Ethiprol, Fipronil, Pyrafluprol, Pyriprol, Tebufenpyrad, Tolfenpyrad, Vaniliprole; Pyrethroidinsektizide; insbesondere Pyrethroidesterinsektizide, wie Acrinathrin, Allethrin, Bioallethrin, Barthrin, Bifenthrin, Bioethanomethrin, Cyclethrin, Cycloprothrin, Cyfluthrin, Beta-Cyfluthrin, Cyhalothrin, Gamma-Cyhalothrin, Lambda-Cyhalothrin, Cypermethrin, Alpha-Cypermethrin, Beta-Cypermethrin, Theta-Cypermethrin, Zeta-Cypermethrin, Cyphenothrin, Deltamethrin, Dimefluthrin, Dimethrin, Empenthrin, Fenfluthrin, Fenpirithrin, Fenpropathrin, Fenvalerate, Esfenvalerate, Flucythrinate, Fluvalinate, Tau-Fluvalinate, Furethrin, Imiprothrin, Metofluthrin, Permethrin, Biopermethrin, Transpermethrin, Phenothrin, Prallethrin, Profluthrin, Pyresmethrin, Resmethrin, Bioresmethrin, Cismethrin, Tefluthrin, Terallethrin, Tetramethrin, Tralomethrin, Transfluthrin; und Pyrethroidetherinsektizide, wie Etofenprox, Flufenprox, Halfenprox, Protrifenbute, Silafluofen;

Pyrimidinamininsektizide, wie Flufenerim, Pyrimidifen; Pyrrolinsektizide, wie Chlorfenapyr; Tetronicsäurinsektizide, wie Spiromesifen; Thioharnstoffinsektizide, wie Diafenthiuron; Harnstoffinsektizide, wie Flucofuron, Sulcofuron; unklassifizierte Insektizide, wie Closantel, Crotamiton, EXD, Fenazaflor, Fenoxacrim, Flubendiamide, Hydramethylnon, Isoprothiolane, Malonoben, Metaflumizon, Metoxadiazon, Nifluridide, Pyridaben, Pyridalyl, Rafoxanide, Triarathene, Triazamate.

Gemäß einer besonderen Ausführungsform der vorliegenden Erfindung umfassen Insektizide (e3):

- Organo(thio)phosphate wie Acephate, Azamethiphos, Azinphos-ethyl, Azinphos-methyl, Cadudsafos, Chlorethoxyphos, Chlorfenvinphos, Chlormephos, Chlorpyrifos, Chlorpyrifos-methyl, Chlorfenvinphos, Coumaphos, Cyanophos, Demeton-S-methyl, Diazinon, Dichlorvos/ DDVP, Dicrotophos, Dimethoate, Dimethylvinphos, Disulfoton, EPN, Ethion, Ethoprophos, Famphur, Fenamiphos, Fenitrothion, Fenthion, Fosthiazate, Heptenophos, Isoxathion, Malathion, Mecarbam, Methamidophos, Methidathion, Methyl-parathion, Mevinphos, Monocrotophos, Naled, Omethoate, Oxydemeton-methyl, Paraoxon, Parathion, Parathion-methyl, Phenthoat, Phorat, Phosalon, Phosmet, Phosphamidon, Phorate, Phoxim, Pirimiphos, Pirimiphos-methyl, Profenofos, Propetamphos, Prothiofos, Pyraclofos, Pyridaphenthion, Quinalphos, Sulfotep, Sulprophos, Tebupirimfos, Temephos, Terbufos, Tetrachlorvinphos, Thiometon, Triazophos, Trichlorfon, Vamidothion;
- Carbamate wie Alanycarb, Aldicarb, Bendiocarb, Benfuracarb, Butocarboxim, Butoxycarboxim, Carbaryl, Carbofuran, Carbosulfan, Ethiofencarb, Fenobucarb, Fenoxycarb, Formetanat, Furathiocarb, Isoprocarb, Methiocarb, Methomyl, Metolcarb, Oxamyl, Pirimicarb, Propoxur, Thiodicarb, Thiofanox, Triazemate, Trimethacarb, XMC, Xylylcarb;
- Pyrethroide, wie Acrinathrin, Allethrin, d-cis-trans Allethrin, d-trans Allethrin, Bifenthrin, Bioallethrin, Bioallethrin S-cyclopentenyl, Bioresmethrin, Cycloprothrin, Cyfluthrin, beta-Cyfluthrin, Cyhalothrin, lambda-Cyhalothrin, gamma-Cyhalothrin, Cyphenothrin, Cypermethrin, alpha-Cypermethrin, beta-Cypermethrin, theta-Cypermethrin, zeta-Cypermethrin, Deltamethrin, Empenthrin, Esfenvalerat, Etofenprox, Fenpropathrin, Fenvalerat, Flucythrinat, Flumethrin, tau-Fluvalinate, Halfenprox, Imiprothrin, Permethrin, Phenothrin, Prallethrin, Profluthrin, Pyrethrin I und II, Resmethrin, RU 15525, Silafluofen, tau-Fluvalinate, Tefluthrin, Tetramethrin, Tralomethrin, Transfluthrin, Dimefluthrin, ZXI 8901;
- Arthropode Wachstumsregulatoren: a) Chitinsyntheseinhibitoren z. B. Benzoylharnstoffe wie Bistrifluron, Chlorfluazuron, Diflubenzuron, Flucycloxuron, Flufenoxuron, Hexaflumuron, Lufenuron, Novaluron, Noviflumuron, Teflubenzuron, Triflumuron, Buprofezin, Diofenolan, Hexythiazox, Etoxazole, Clofentezine; b) Ecdysone antagonisten, wie Chromafenozide, Halofenozide, Methoxyfenozide, Tebufenozide, Azadirachtin; c) Juvenoide wie Pyriproxyfen, Hydroprene, Kinoprene, Methoprene, Fenoxycarb; d) Lipid-Biosyntheseinhibitors wie Spirodiclofen, Spiromesifen, Spirotetramat;
- Agonisten/Antagonisten der Nicotin Rezeptoren: Acetamiprid, Clothianidin, Dinotefuran, Imidacloprid, Nitenpyram, Thiacloprid, Thiamethoxam, Nicotin, Bensultap, Cartap-hydrochloride, Thiocyclam, Natrium-Thiosultap; die Thiazolverbindung der Formel ($\Gamma^1$)

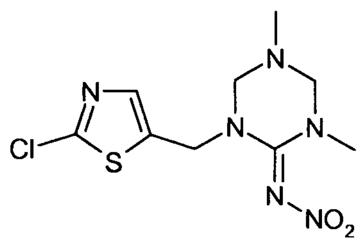

($\Gamma^1$)

;

- GABA Antagonisten wie Acetoprol, Chlordan, Endosulfan, Ethiprol, gamma-HCH (Lindan), Fipronil, Vaniliprol, Pyrafluprol, Pyriprol, Vaniliprol, Phenylpyrazol-Verbindungen der Formel $\Gamma^2$

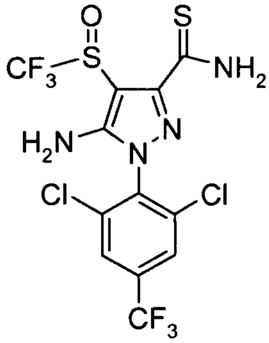

($\Gamma^2$)

;

- Macrocyclische Lactone wie Abamectin, Emamectin, Emamectinbenzoate, Milbemectin, Lepimectin, Spinosad;
- METI I Verbindungen wie Fenazaquin, Fenpyroximat, Flufenerim, Pyridaben, Pyrimidifen, Rotenon, Tebufenpyrad, Tolfenpyrad;
- METI II und III Verbindungen wie Acequinocyl, Fluacrypyrim, Hydramethylnon;
- Entkopplungsverbindungen wie Chlorfenapyr, DNOC;
- Inhibitoren der oxidativen Phosphorylierung wie Azocyclotin, Cyhexatin, Diafenthiuron, Fenbutatinoxid, Propargit, Tetradifon;
- Verschiedene Oxidaseinhibitoren wie Piperonylbutoxid;
- Natrium-Kanal-Blocker wie Indoxacarb, Metaflumizone;
- Microbielle Disruptoren wie Bacillus thuringiensis subsp. israelensis, Bacillus sphaericus, Bacillus thuringiensis subsp. aizawai, Bacillus thuringiensis subsp. kurstaki, Bacillus thuringiensis subsp. tenebrionis;
- Weitere wie Amitraz, Benclothiaz, Benzoximat, Bifenazat, Bromopropylat, Cartap, Chinomethionat, Chloropicrin, Flonicamid, Methylbromid, Pyridalyl, Pymetrozin, Rynaxypursulfur, Brechweinstein, Thiocyclam, Tribufosflubendiamide, Cyenopyrafen, Flupyrazofos, Cyflumetofen, Amidoflumet, NNI-0101, N-R'-2,2-Dihalo-1-R"-cydopropancarboxamid-2-(2,6-dichlor-$\alpha,\alpha,\alpha$-trifluor-p-tolyl)hydrazon oder N-R'-2,2-Di(R"')propionamid-2-(2,6-dichlor-$\alpha,\alpha,\alpha$-trifluor-p-tolyl)-hydrazon, worin R' für Methyl oder Ethyl steht, Halo für Chlor oder Brom steht, R" für Wasserstoff oder Methyl steht und R"' für Methyl oder Ethyl steht, Anthranilamide der Formel $\Gamma^3$

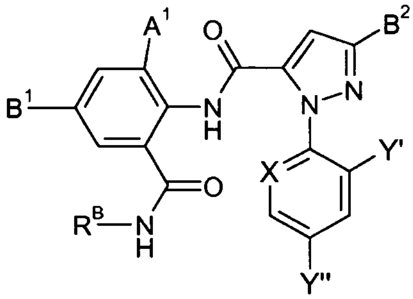

($\Gamma^3$)

,

worin $A^1$ für $CH_3$, Cl, Br, I steht, X für C-H, C-Cl, C-F oder N steht, Y' für F, Cl oder Br steht, Y" für F, Cl, $CF_3$ steht, $B^1$ für Wasserstoff, Cl, Br, I, CN steht, $B^2$ für Cl, Br, $CF_3$, $OCH_2CF_3$, $OCF_2H$ steht and $R^B$ für Wasserstoff, $CH_3$ oder $CH(CH_3)_2$ steht, und Malononitrile wie in JP 2002 284608, WO 02/89579, WO 02/90320, WO 02/90321, WO 04/06677, WO 04/20399 oder JP 2004 99597 beschrieben;
- Malodinitrile wie $CF_3(CH_2)_2C(CN)_2CH_2(CF_2)_3CF_2H$, $CF_3(CH_2)_2C(CN)_2CH_2(CF_2)_5CF_2H$, $CF_3(CH_2)_2C(CN)_2(CH_2)_2C(CF_3)_2F$, $CF_3(CH_2)_2C(CN)_2(CH_2)_2(CF_2)_3CF_3$, $CF_2H(CF_2)_3CH_2C(CN)_2CH_2(CF_2)_3CF_2H$, $CF_3(CH_2)_2C(CN)_2CH_2(CF_2)_3CF_3$, $CF_3(CF_2)_2CH_2C(CN)_2CH_2(CF_2)_3CF_2H$, $CF_3CF_2CH_2C(CN)_2CH_2(CF_2)_3CF_2H$, 2-(2,2,3,3,4,4,5,5-Octafluorpentyl)-2-(3,3,4,4,4-pentafluorbutyl)-malonodinitril und $CF_2HCF_2CF_2CF_2CH_2C(CN)_2CH_2CH_2CF_2CF_3$
- Fluorierte Chinazolinone wie:

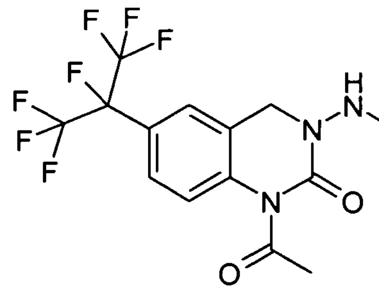

1-Acetyl-3-[(pyridin-3-ylmethyl)-amino]-6-(1,2,2,2-tetrafluoro-1-trifluoromethyl-ethyl)-3,4-dihydro-1H-quinazolin-2-on;

- Außerdem Pyrimidinylalkinylether der Formel $\Gamma^4$ oder Thiadiazolylalkinylether der Formel $\Gamma^5$:

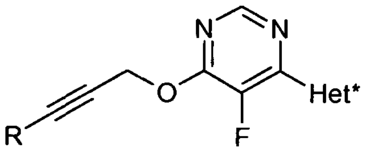 $\Gamma^4$ 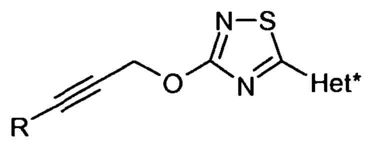 $\Gamma^5$

worin R für Methyl oder Ethyl steht und Het* für 3,3-Dimethylpyrrolidin-1-yl, 3-Methylpiperidin-1-yl, 3,5-Dimethylpiperidin-1-yl, 4-Methylpiperidin-1-yl, Hexahydroazepin-1-yl, 2,6-Dimethylhexahydroazepin-1-yl oder 2,6-Dimethylmorpholin-4-yl. Diese Verbindungen werden beispielsweise in JP 2006 131529 beschrieben.

Von den hier speziell genannten Wirkstoffen können auch Salze, insbesondere landwirtschaftlich nutzbare Salze eingesetzt werden.

In einer besonderen Ausführungsform der Erfindung ist der Pflanzenschutzwirkstoff ein Fungizid.

Besonders bevorzugt ist es hierbei, wenn das Fungizid ein Wirkstoff aus der Gruppe der Anilide, Triazolopyrimidine, Strobilurine oder Triazole ist, insbesondere ein Anilid ausgewählt unter Boscalid, Carboxin, Metalaxyl und Oxadixyl, das Triazolopyrimidin 5-Chlor-7-(4-methylpiperidin-1-yl)-6-(2,4,6-trifluorphenyl)-[1,2,4]triazol[1,5-a]-pyrimidin, ein Strobilurin ausgewählt unter Azoxystrobin, Pyraclostrobin, Dimoxystrobin, Trifloxystrobin, Fluoxystrobin, Picoxystrobin und Orysastrobin oder ein Triazol ausgewählt unter Epoxiconazol, Metconazol, Tebuconazol, Flusilazol, Fluquinconazol, Triticonazol, Propiconazol, Penconazol, Cyproconazol und Prothioconazol.

Erfindungsgemäß besonders bevorzugt ist Epoxiconazol.

Die hier gewählten Namen von Pflanzenschutzwirkstoffen, z.B. Epoxiconazol, schließen isomere Formen dieser Verbindung mit ein. Insbesondere zu nennen sind Stereoisomere, wie Enantiomere oder Diastereoisomere der Formeln. Neben den im Wesentlichen reinen Isomeren gehören zu den Verbindungen der Formeln auch deren Isomerengemische, z. B. Stereoisomerengemische.

Allgemein bevorzugt werden Wirkstoffe mit einem höheren Anteil des gegenüber dem optischen Antipoden biologisch wirksameren Stereoisomers, besonders bevorzugt isomerenreine Wirkstoffe.

Die vorliegende Erfindung betrifft insbesondere Mittel mit hohen Wirkstoffanteilen (Konzentrate). So macht der Anteil der Komponente (a) am Gesamtgewicht des Mittels in der Regel mehr als 5 Gew.-%, vorzugsweise mehr als 10 Gew.-% und insbesondere mehr als 20 Gew.-% aus. Andererseits liegt der Anteil der Komponente (a) am Gesamtgewicht des Mittels zweckmäßigerweise in der Regel bei weniger als 80 Gew.-%, vorzugsweise bei weniger als 70 Gew.-% und insbesondere bei weniger als 60 Gew.-%.

Um einen ausreichenden adjuvanten Effekt zu gewährleisten, beträgt das Gewichtsverhältnis von Komponente (b) zu Komponente (a) vorzugsweise mehr als 0,5, insbesondere mehr als 1 und vorteilhafterweise mehr als 2.

Die erfindungsgemäßen Mittel können im Übrigen übliche Hilfs- und/oder Zusatzstoffe für die Herstellung von Formulierungen im agrochemischen Bereich und insbesondere auf dem Gebiet des Pflanzenschutzes enthalten. Dazu gehören beispielsweise Tenside, Dispergierhilfsmittel, Netzmittel, Verdickungsmittel, organische Lösungsmittel, Cosolventien, Entschäumer, Carbonsäuren, Konservierungsmittel, Stabilisierungsmittel, etc.

Gemäß einer besonderen Ausführungsform der vorliegenden Erfindung umfassen die Mittel als oberflächenaktive Komponente (c) wenigstens ein (weiteres) Tensid. Der Begriff "Tensid" bezeichnet hier grenzflächenaktive bzw. oberflächenaktive Mittel.

Die Komponente (c) wird insbesondere als Dispergator bzw. Emulgator, vor allem zum Dispergieren eines Feststoffanteils in Suspensionskonzentraten, zugesetzt. Ferner können Teile der Komponente (c) als Netzmittel dienen.

Prinzipiell brauchbar sind anionische, kationische, amphotere und nichtionische Tenside, wobei Polymer-Tenside sowie Tenside mit Heteroatomen in der hydrophoben Gruppe eingeschlossen sind.

Zu den anionischen Tensiden gehören beispielsweise Carboxylate, insbesondere Alkali-, Erdalkali- und Ammoniumsalze von Fettsäuren, z.B. Kaliumstearat, die üblicherweise auch als Seifen bezeichnet werden; Acylglutamate; Sarkosinate, z.B. Natriumlauroylsarkosinat; Taurate; Methylcellulosen; Alkylphosphate, insbesondere Mono- und Diphosphorsäurealkylester; Sulfate, insbesondere Alkylsulfate und Alkylethersulfate; Sulfonate, weitere Alkyl- und Alkylarylsulfonate, insbesondere Alkali-, Erdalkali- und Ammoniumsalze von Arylsulfonsäuren sowie alkylsubstituierten Arylsulfonsäuren, Alkylbenzolsulfonsäuren, wie beispielsweise Lignin- und Phenolsulfonsäure, Naphthalin- und Dibutylnaphthalinsulfonsäuren, oder Dodecylbenzolsulfonate, Alkylnaphthalinsulfonate, Alkylmethylestersulfonate, Kondensationsprodukte von sulfoniertem Naphthalin und Derivaten davon mit Formaldehyd, Kondensationsprodukte von Naphthalinsulfonsäuren, Phenol- und/oder Phenolsulfonsäuren mit Formaldehyd oder mit Formaldehyl und Harnstoff, Mono- oder Dialkyl-bernsteinsäureestersulfonate; sowie Eiweißhydrolysate und Lignin-Sulfitablaugen. Die zuvor genannten Sulfonsäuren werden vorteilhafterweise in Form ihrer neutralen oder gegebenenfalls basischen Salze verwendet.

Zu den kationischen Tensiden gehören beispielsweise quaternierte Ammoniumverbindungen, insbesondere Alkyltrimethylammonium- und Dialkyldimethylammonium-Halogenide und -alkylsulfate sowie Pyridin- und Imidazolin-Derivate, insbesondere Alkylpyridinium-Halogenide.

Zu den nichtionischen Tensiden gehören beispielsweise weitere Alkoxylate und vor allem Ethoxylate sowie nichtionische Tenside, insbesondere

- Fettalkohol-polyoxyethylen-ester, beispielsweise Laurylalkoholpolyoxyethylenetheracetat,
- Alkyl-Polyoxyethylen- und -polyoxypropylen-ether, z.B. von Fettalkoholen mit 8 oder mehr Kohlenstoffatomen, Alkylarylalkohol-Polyoxyethylenether, z.B. Octylphenol-Polyoxyethylenether,
- alkoxylierte tierische und/oder pflanzliche Fette und/oder Öle, beispielsweise Maisölethoxylate, Rizinusölethoxylate, Talgfettethoxylate,
- Glycerinester, wie beispielsweise Glycerinmonostearat,
- Alkylphenolalkoxylate, wie beispielsweise ethoxyliertes iso-Octyl-, Octyl- oder Nonyl-phenol, Tributylphenol-polyoxyethylenether,
- Fettaminalkoxylate, Fettsäureamid- und Fettsäurediethanol-amidalkoxylate, insbesondere deren Ethoxylate,
- Zuckertenside, Sorbitester, wie beispielsweise Sorbitanfettsäureester (Sorbitanmonooleat, Sorbitantristearat), Polyoxy-ethylensorbitanfettsäureester, Alkylpolyglycoside, N-Alkylgluconamide,
- Alkylmethylsulfoxide,
- Alkyldimethylphosphinoxide, wie beispielsweise Tetradecyldimethylphosphinoxid.

Zu den amphoteren Tensiden gehören beispielsweise Sulfobetaine, Carboxybetaine und Alkyldimethylaminoxide, z.B. Tetradecyldimethylaminoxid.

Zu den polymeren Tensiden gehören beispielsweise Di-, Tri- und Multiblockpolymere vom Typ $(AB)_x$, ABA und BAB, z.B. gegebenenfalls Endgruppen-verschlossene Ethylenoxid/Propylenoxid-Blockcopolymere, z.B. Ethylendiamin-EO/PO-Blockcopolymere, Polystyrol-Block-Polyethylenoxid, und AB-Kammpolymere, z.B. Polymethacrylat-comb-Polyethylenoxid.

Weitere Tenside, die hier beispielhaft genannt werden sollen, sind Perfluortenside, Silikontenside, z.B. Polyether-modifizierte Siloxane, Phospholipide, wie beispielsweise Lecithin oder chemisch modifizierte Lecithine, Aminosäuretenside, z.B. N-Lauroylglutamat und oberflächenaktive Homo- und Copolymere, z.B. Polyvinylpyrrolidon, Polyacrylsäuren in Form ihrer Salze, Polyvinylalkohol, Polypropylenoxid, Polyethylenoxid, Maleinsäureanhydrid-Isobuten-Copolymere und Vinylpyrrolidon-Vinylacetat-Copolymere.

Sofern nicht spezifiziert, handelt es sich bei den Alkylketten der oben aufgeführten Tenside um lineare oder verzweigte Reste mit üblicherweise 8 bis 20 Kohlenstoffatomen.

Vorzugsweise ist das weitere Tensid im Rahmen der Komponente (c) ausgewählt unter nichtionischen Tensiden. Hiervon sind insbesondere diejenigen bevorzugt, die HLB-Werte im Bereich von 2 bis 16, vorzugsweise im Bereich von 5 bis 16, und insbesondere im Bereich von 8 bis 16 besitzen.

Der Anteil der Komponente (c) am Gesamtgewicht des Mittels beträgt - sofern vorhanden - in der Regel weniger als 50 Gew.-%, vorzugsweise weniger als 15 Gew.-% und insbesondere weniger als 5 Gew.-%.

Gemäß einer besonderen Ausführungsform der vorliegenden Erfindung umfassen die Mittel als Komponente (d) mindestens einen weiteren Hilfsstoff.

Die Komponente (d) kann vielerlei Zwecke erfüllen. Die Wahl geeigneter Hilfsstoffe erfolgt den Anforderungen entsprechend in üblicher Weise durch den Fachmann.

Beispielsweise sind weitere Hilfsstoffe ausgewählt unter

(d1) Lösungs- oder Verdünnungsmitteln;

(d2) Retentionsmitteln, pH-Puffern, Anti-Schaumstoffen.

Neben Wasser können die Mittel weitere Lösungsmittel löslicher Bestandteile bzw. Verdünnungsmittel unlöslicher Bestandteile des Mittels umfassen.

Prinzipiell brauchbar sind beispielsweise Mineralöle, synthetische Öle sowie pflanzliche und tierische Öle, sowie niedermolekulare hydrophile Lösungsmittel wie Alkohole, Ether, Ketone und ähnliches.

Einerseits sind daher aprotische bzw. apolare Lösungs- bzw. Verdünnungsmittel zu nennen, wie Mineralölfraktionen von mittlerem bis hohem Siedepunkt, z.B. Kerosin und Dieselöl, ferner Kohlenteeröle, Kohlenwasserstoffe, Paraffinöle, z.B. $C_8$- bis $C_{30}$-Kohlenwasserstoffe der n- oder iso-Alkan-Reihe oder Gemische davon, gegebenenfalls hydrierte oder teilhydrierte Aromaten oder Alkylaromaten aus der Benzol- oder Naphthalin-Reihe, z.B. aromatische oder cycloaliphatische $C_7$- bis $C_{18}$-Kohlenwasserstoffverbindungen, aliphatische oder aromatische Carbonsäure- oder Dicarbonsäureester, Fette oder Öle pflanzlichen oder tierischen Ursprungs, wie Mono-, Di- und Triglyceride, in Reinform oder als Gemisch beispielsweise in Form öliger Naturstoffextrakte, z.B. Olivenöl, Sojaöl, Sonnenblumenöl, Castoröl, Sesamöl, Maisöl, Erdnussöl, Rapsöl, Leinsamenöl, Mandelöl, Rhizinusöl, Safloröl, sowie deren Raffinate, z.B. hydrierte oder teilhydrierte Produkte davon und/oder deren Ester, insbesondere Methyl- und Ethylester.

Beispiele für $C_8$- bis $C_{30}$-Kohlenwasserstoffe der n- oder iso-Alkan-Reihe sind n- und iso-Octan, -Decan, -Hexadecan, -Octadecan, -Eicosan, und vorzugsweise Kohlenwasserstoffgemische, wie Paraffinöl (das in technischer Qualität bis zu etwa 5% Aromaten enthalten kann) und ein $C_{18}$-$C_{24}$-Gemisch, das unter der Bezeichnung Spraytex-Öl im Handel von der Fa. Texaco erhältlich ist.

Zu den aromatischen oder cycloaliphatischen $C_7$- bis $C_{18}$-Kohlenwasserstoffverbindungen gehören insbesondere aromatische oder cycloaliphatische Lösungsmittel aus der Alkyl-Aromatenreihe. Diese Verbindungen können unhydriert, teilhydriert oder vollständig hydriert sein. Zu derartigen Lösungsmitteln gehören insbesondere Mono-, Di- oder Trialkylbenzole, Mono-, Di-, Trialkyl-substituierte Tetraline und/oder Mono-, Di-, Tri- oder Tetraalkyl-substituierte Naphthaline (Alkyl steht vorzugsweise für $C_1$-$C_6$-Alkyl). Beispiele derartiger Lösungsmittel sind Toluol, o-, m-, p-Xylol, Ethylbenzol, Isopropy-Ibenzol, tert.-Butylbenzol und Gemische, wie die unter der Bezeichnung Shellsol und Solvesso vertriebenen Produkte der Fa. Exxon, z.B. Solvesso 100, 150 und 200.

Beispiele für geeignete Monocarbonsäureester sind Ölsäureester, insbesondere Methyloleat und Ethyloleat, Laurinsäureester, insbesondere 2-Ethylhexyllaurat, Octyllaurat und Isopropyllaurat, Isopropylmyristat, Palmitinsäureester, insbesondere 2-Ethylhexylpalmitat und Isopropylpalmitat, Stearinsäureester, insbesondere Stearinsäure-n-butylester und 2-Ethylhexansäure-2-ethylhexyl-ester.

Beispiele für geeignete Dicarbonsäureester sind Adipinsäureester, insbesondere Dimethyladipat, Di-n-butyladipat, Di-n-octyladipat, Di-iso-octyladipat, auch als Bis-(2-ethylhexyl)adipat bezeichnet, Di-n-nonyladidipat, Di-iso-nonyladidipat und Ditridecyladipat; Bernsteinsäureester, insbesondere Di-n-octylsuccinat und Di-iso-octylsuccinat, und Di-(iso-nonyl)cyclohexan-1,2-dicarboxylat.

Der Anteil der zuvor beschriebenen aprotischen Lösungs- bzw. Verdünnungsmitteln am Gesamtgewicht des Mittels beträgt in der Regel weniger als 80 Gew.-%, vorzugsweise weniger als 50 Gew.-% und insbesondere weniger als 30 Gew.-%.

Einige dieser aprotischen Lösungs- bzw Verdünnungsmittel können ebenfalls adjuvante, d.h. insbesondere wirkungsfördernde Eigenschaften, haben. Dies gilt insbesondere für besagte Mono- und Dicarbonsäureester. Unter diesem Aspekt können derartige Adjuvantien auch als Teil einer weiteren Formulierung (stand alone-Produkt) mit den erfindungsgemäßen Alkoholalkoxylaten bzw. diese enthaltenden Mitteln zu einem zweckmäßigen Zeitpunkt, in der Regel kurz vor der Applikation, vermischt werden.

Andererseits sind protische bzw. polare Lösungs- bzw. Verdünnungsmittel zu nennen, z.B. $C_2$-$C_8$-Monoalkohole wie Ethanol, Propanol, Isopropanol, Butanol, Isobutanol, tert-Butanol, Cyclohexanol und 2-Ethylhexanol, $C_3$-$C_8$-Ketone wie Diethylketon, t-Butylmethylketon, Cyclohexanon und 2-sec-Butylphenol, sowie aprotische Amine, wie N-Methyl- und N-Octylpyrrolidon.

Der Anteil der zuvor beschriebenen protischen bzw. polaren Lösungs- bzw. Verdünnungsmitteln am Gesamtgewicht des Mittels beträgt in der Regel weniger als 80 Gew.-%, vorzugsweise weniger als 50 Gew.-% und insbesondere weniger als 30 Gew.-%.

Auch Antiabsetzmittel können insbesondere für Suspensionskonzentrate verwendet werden. Diese dienen vor allem zur rheologischen Stabilisierung. Insbesondere sind in diesem Zusammenhang mineralische Produkte, z.B. Bentonite, Talcite und Hektorite zu nennen.

Weitere gegebenenfalls brauchbare Zusätze sind z.B. unter Mineralsalzlösungen, welche zur Behebung von Ernährungs- und Spurenelementmängeln eingesetzt werden, nichtphytotoxischen Ölen und Ölkonzentraten, Antidriftreagenzien, Antischaummitteln, insbesondere solchen vom Silicon-Typ, beispielsweise das von der Firma Wacker vertriebene Silicon SL, und ähnlichem zu finden.

Gemäß einer bevorzugten Ausführungsform handelt es sich bei den erfindungsgemäßen Mitteln um Flüssigformulierungen.

Die Formulierungen können beispielsweise als emulgierbares Konzentrat (EC), Suspoemulsion (SE), Öl-in-Wasser-Emulsion (O/W), Wasser-in-Öl-Emulsion (W/O), wässriges Suspensionskonzentrat, Öl-Suspensionskonzentrat

(OD), Mikroemulsion (ME) vorliegen.

Die Herstellung der Mittel kann in an sich bekannter Weise erfolgen. Dazu werden zumindest Teile der Komponenten zusammengegeben. Hierbei ist zu beachten, dass

Produkte, insbesondere handelsübliche Produkte, verwendet werden können, deren Bestandteile zu unterschiedlichen Komponenten beitragen können. Beispielsweise kann ein bestimmtes Tensid in einem aprotischen Lösungsmittel gelöst sein, so dass dieses Produkt zu verschiedenen Komponenten beitragen kann. Ferner können unter Umständen auch geringe Anteile an weniger erwünschten Substanzen mit handelsüblichen Produkten eingebracht werden. Als Gemisch sind die zusammengegebenen Produkte dann in der Regel intensiv miteinander zu einem homogenen Gemisch zu vermengen und erforderlichenfalls - z.B. im Falle von Suspensionen, zu vermahlen.

Das Vermengen kann in an sich bekannter Weise erfolgen, z.B. durch Homogenisieren mit geeigneten Vorrichtungen wie KPG- oder Magnetrührern. Auch das Vermahlen ist ein an sich bekannter Vorgang. Als Mahlkörper kann man Glasmahlkörper oder andere mineralische oder metallische Mahlkörper, in der Regel in einer Größe von 0,1-30 mm und insbesondere von 0,6-2 mm verwenden. Man zerkleinert das Gemisch in der Regel solange, bis die gewünschte Partikelgröße erreicht ist.

Die Mittel werden vor Gebrauch in der Regel durch Verdünnen in üblicher Weise in eine zur Anwendung brauchbare Form überführt. Bevorzugt ist das Verdünnen mit Wasser oder auch aprotischen Lösungsmitteln, beispielsweise im Tankmixverfahren. Die Verwendung in Form einer Spritzbrühen-Zubereitung ist bevorzugt. Appliziert werden kann im Vorauflauf- oder Nachauflaufverfahren. Besondere Vorteile ergeben sich im Nachauflaufverfahren.

Die erfindungsgemäße Verwendung umfasst auch den Einsatz der erfindungsgemäßen Alkoxylate als "stand-alone"-Produkt. Dazu werden die Alkoxylate in geeigneter Weise hergerichtet, um kurz vor der Anwendung dem zu applizierenden Mittel zugesetzt zu werden. Für das Verhältnis von Alkoxylat zu Wirkstoff gelten die oben in Zusammenhang mit dem Mittel gemachten Aussagen. In diesem Sinne kann die erfindungsgemäße Kombination aus Wirkstoff und Adjuvans auch in Form eines Kits bereitgestellt werden. Ein solcher Kit beinhaltet zumindest zwei Behältnisse. Ein Behältnis umfasst wenigstens einen Wirkstoff zur Pflanzenbehandlung, gegebenenfalls als Mittel mit zweckmäßigen Hilfsstoffen formuliert. Ein weiteres Behältnis umfasst wenigstens ein Alkoholalkoxylat der Formel (Ib).

Vor allem bei der Sprühbehandlung ergeben sich besondere Vorteile. Für eine übliche Tankmix-Spritzbrühe werden die erfindungsgemäßen, bereits wenigstens einen alkoxylierten verzweigten Alkohol enthaltenden Mittel - oder weitere Pflanzenbehandlungsmittel unter Zusatz wenigstens eines alkoxylierten verzweigten Alkohols als "stand-alone"-Produkt - so mit Wasser verdünnt, dass pro ha etwa 0,01 bis 10, vorzugsweise etwa 0,05 bis 5 und insbesondere 0,1 bis 1 kg wenigstens eines erfindungsgemäßen Alkoxylats appliziert werden.

Im Rahmen der vorliegenden Beschreibung sind Mengenangaben im Allgemeinen auf das Gesamtgewicht eines Mittels zu beziehen, sofern nicht anderes angeben ist. Der Ausdruck "im Wesentlichen" bezeichnet erfindungsgemäß in der Regel ein prozentuales Verhältnis von wenigstens 80 %, vorzugsweise von wenigstens 90 % und insbesondere von wenigstens 95 %.

Die Erfindung wird durch die nachfolgenden Beispiele näher erläutert:

Die gewichtsmittleren Molekulargewichte der erfindungsgemäßen Alkoxylate können mittels Gelpermeationschromatographie nach DIN 55672 bestimmt werden.

Vorschrift zur Bestimmung des Iso-Index eines Alkoholgemisches aus sekundären und/oder primären Alkoholen über $^1$H-NMR:

Ca. 20 mg Alkoholgemisch werden in 0,4 ml $CDCl_3$ gelöst und eine kleine Menge TMS zur Frequenzreferierung zugegeben. Danach wird die Lösung mit 0,2 ml TAI versetzt, in ein 5 mm NMR-Röhrchen gefüllt und im NMR-Spektrometer vermessen.

Messbedingungen:

Spektrometerfrequenz: 400 MHZ
Relaxationsdelay: 10 s
Pulswinkel: 30°
Aufgenommene Datenpunkte: 64 K
Scanzahl: 64
Transformierte Datenpunkte 64 K
Exponentialmultiplikation: 0,2 Hz

Nach Fouriertransformation, automatischer Phasen- und Basislinienkorrektur erfolgt eine manuelle Integration der Bereiche 5,4 bis 3,7 ppm (alle mit TAI veresterten sekundären bzw. primären Alkohole) und 2,4 bis 0,4 ppm (alle Methyl-, Methylen- und Methinprotonen). Dabei werden die Integralphasen nullter Ordnung so gewählt, dass Anfang und Ende der Integralkurven im Wesentlichen horizontal verlaufen. Die Signale < 1 ppm werden den Methylgruppen zugeordnet.

Herstellungsbeispiele

Referenzbeispiele 1 bis 20:

Herstellung der Alkoxylate (a) bis (t)

Referenzbeispiel 1: 1-Heptanol + 3 BO + 5 EO (a)

Man legte 116,2 g 1-Heptanol (ensprechend 1,0 mol) zusammen mit 2,76 g Kalium-tert-Butylat (Alkoxylierungskatalysator; entsprechend 0,5 Gew.-% bezogen auf den Gesamtansatz) in einem Autoklaven vor.
Bei 130°C gaste man zunächst 216,0 g 1,2-Butylenoxid (entsprechend 3,0 mol) und anschliessend 220,0 g Ethylenoxid (entsprechend 5,0 mol) ein.
Zur Vervollständigung der Umsetzung rührte man bei gleichzeitigem Abkühlen auf 80°C 30 Minuten nach.
Man erhielt 553,3 g des Alkoholalkoxylats (a).
Das mittels Gelpermeationschromatographie nach DIN 55672 bestimmte gewichtsmittlere Molekulargewicht beträgt ca. 550 g/mol.

Referenzbeispiel 2: 1-Heptanol + 5 BO + 5 EO (b)

Man legte 116,2 g 1-Heptanol (ensprechend 1,0 mol) zusammen mit 3,48 g Kalium-tert-Butylat (Alkoxylierungskatalysator; entsprechend 0,5 Gew.-% bezogen auf den Gesamtansatz) in einem Autoklaven vor.
Bei 130°C gaste man zunächst 360,0 g 1,2-Butylenoxid (entsprechend 5,0 mol) und anschliessend 220,0 g Ethylenoxid (entsprechend 5,0 mol) ein.
Zur Vervollständigung der Umsetzung rührte man bei gleichzeitigem Abkühlen auf 80°C 30 Minuten nach.
Man erhielt 727,3 g des Alkoholalkoxylats (b).
Das mittels Gelpermeationschromatographie nach DIN 55672 bestimmte gewichtsmittlere Molekulargewicht beträgt ca. 725 g/mol.

Referenzbeispiel 3: 1-Heptanol + 7 BO + 5 EO (c)

Man legte 116,2 g 1-Heptanol (ensprechend 1,0 mol) zusammen mit 4,2 g Kalium-tert-Butylat (Alkoxylierungskatalysator; entsprechend 0,5 Gew.-% bezogen auf den Gesamtansatz) in einem Autoklaven vor.
Bei 130°C gaste man zunächst 504,0 g 1,2-Butylenoxid (entsprechend 7,0 mol) und anschliessend 220,0 g Ethylenoxid (entsprechend 5,0 mol) ein.
Zur Vervollständigung der Umsetzung rührte man bei gleichzeitigem Abkühlen auf 80°C 30 Minuten nach.
Man erhielt 889,5 g des Alkoholalkoxylats (c).
Das mittels Gelpermeationschromatographie nach DIN 55672 bestimmte gewichtsmittlere Molekulargewicht beträgt ca. 840 g/mol.

Referenzbeispiel 4: 1-Heptanol + 3 BO + 12 EO (d)

Man legte 116,2 g 1-Heptanol (ensprechend 1,0 mol) zusammen mit 1,72 g Kalium-tert-Butylat (Alkoxylierungskatalysator; entsprechend 0,2 Gew.-% bezogen auf den Gesamtansatz) in einem Autoklaven vor.
Bei 130°C gaste man zunächst 216,0 g 1,2-Butylenoxid entsprechend 3,0 mol) und anschliessend 528,0 g Ethylenoxid (entsprechend 12,0 mol) ein.
Zur Vervollständigung der Umsetzung rührte man bei gleichzeitigem Abkühlen auf 80°C 30 Minuten nach.
Man erhielt 844 g des Alkoholalkoxylats (d).
Das mittels Gelpermeationschromatographie nach DIN 55672 bestimmte gewichtsmittlere Molekulargewicht beträgt ca. 860 g/mol.

Referenzbeispiel 5: 1-Heptanol + 9 BO + 5 EO (e)

Man legte 116,2 g 1-Heptanol (ensprechend 1,0 mol) zusammen mit 1,97 g Kalium-tert-Butylat (Alkoxylierungskatalysator; entsprechend 0,2 Gew.-% bezogen auf den Gesamtansatz) in einem Autoklaven vor.
Bei 130°C gaste man zunächst 648,0 g 1,2-Butylenoxid (entsprechend 9,0 mol) und anschliessend 220,0 g Ethylenoxid (entsprechend 5,0 mol) ein.
Zur Vervollständigung der Umsetzung rührte man bei gleichzeitigem Abkühlen auf 80°C 30 Minuten nach.
Man erhielt 970 g des Alkoholalkoxylats (e).

Das mittels Gelpermeationschromatographie nach DIN 55672 bestimmte gewichtsmittlere Molekulargewicht beträgt ca. 980 g/mol.

Referenzbeispiel 6: 1-Heptanol + 9 BO + 12 EO (f)

Man legte 116,2 g 1-Heptanol (ensprechend 1,0 mol) zusammen mit 2,58 g Kalium-tert-Butylat (Alkoxylierungskatalysator; entsprechend 0,2 Gew.-% bezogen auf den Gesamtansatz) in einem Autoklaven vor.
Bei 130°C gaste man zunächst 648,0 g 1,2-Butylenoxid (entsprechend 9,0 mol) und anschliessend 528,0 g Ethylenoxid (entsprechend 12,0 mol) ein.
Zur Vervollständigung der Umsetzung rührte man bei gleichzeitigem Abkühlen auf 80°C 30 Minuten nach.
Man erhielt 1325 g des Alkoholalkoxylats (f).
Das mittels Gelpermeationschromatographie nach DIN 55672 bestimmte gewichtsmittlere Molekulargewicht beträgt ca. 1290 g/mol.

Referenzbeispiel 7: 1-Heptanol + 12 EO + 9 BO (g)

Man legte 116,2 g 1-Heptanol (ensprechend 1,0 mol) zusammen mit 1,97 g Kalium-tert-Butylat (Alkoxylierungskatalysator; entsprechend 0,2 Gew.-% bezogen auf den Gesamtansatz) in einem Autoklaven vor.
Bei 130°C gaste man zunächst 528,0 g Ethylenoxid (entsprechend 12,0 mol) und anschliessend 648,0 g 1,2-Butylenoxid (entsprechend 9,0 mol) ein.
Zur Vervollständigung der Umsetzung rührte man bei gleichzeitigem Abkühlen auf 80°C 30 Minuten nach.
Man erhielt 1260 g des Alkoholalkoxylats (g).
Das mittels Gelpermeationschromatographie nach DIN 55672 bestimmte gewichtsmittlere Molekulargewicht beträgt ca. 1290 g/mol.

Referenzbeispiel 8: 1-Heptanol + 3 BO + 12 EO + 1 i-BO (h)

Man legte 174,3 g 1-Heptanol (ensprechend 1,5 mol) zusammen mit 2,58 g Kalium-tert-Butylat (Alkoxylierungskatalysator; entsprechend 0,2 Gew.-% bezogen auf den Gesamtansatz) in einem Autoklaven vor.
Bei 130°C gaste man zunächst 324,0 g 1,2-Butylenoxid (entsprechend 3,0 mol) und anschliessend 792,0 g Ethylenoxid (entsprechend 12,0 mol) ein.
Zur Vervollständigung der Umsetzung rührte man bei gleichzeitigem Abkühlen auf 80°C 30 Minuten nach.
Man legte einen aliquoten Teil 403,0 g des erhaltenen Alkoholalkoxylats (entsprechend 0,5 mol) zusammen mit 0,89 g Kalium-tert-Butylat (Alkoxylierungskatalysator; entsprechend 0,2 Gew.-% bezogen auf den Gesamtansatz) in einem Autoklaven vor.
Bei 140°C gaste man 43,2 g iso-Butylenoxid (entsprechend 0,6 mol) ein.
Zur Vervollständigung der Umsetzung rührte man bei gleichzeitigem Abkühlen auf 80°C 30 Minuten nach.
Man erhielt 438 g des Alkoholalkoxylats (h).
Das mittels Gelpermeationschromatographie nach DIN 55672 bestimmte gewichtsmittlere Molekulargewicht beträgt ca. 880 g/mol.

Referenzbeispiel 9: 1-Heptanol + 3 BO + 12 EO + DMS (i)

Man legte 174,3 g 1-Heptanol (ensprechend 1,5 mol) zusammen mit 2,58 g Kalium-tert-Butylat (Alkoxylierungskatalysator; entsprechend 0,2 Gew.-% bezogen auf den Gesamtansatz) in einem Autoklaven vor.
Bei 130°C gaste man zunächst 324,0 g 1,2-Butylenoxid (entsprechend 3,0 mol) und anschliessend 792,0 g Ethylenoxid (entsprechend 12,0 mol) ein.
Zur Vervollständigung der Umsetzung rührte man bei gleichzeitigem Abkühlen auf 80°C 30 Minuten nach.
Man legte einen aliquoten Teil, 322,4 g (entsprechend 0,4 mol) des erhaltenen Alkoxylats in einem Vierhalskolben vor tropfte unter Kühlung 163,2 g 50% ige Natronlauge (entsprechend 2,04 mol) unter Kühlung zu. Danach wurden bis max. 40°C 65,6 g Dimethylsulfat (entsprechend 0,52 mol) in das Reaktionsgemisch zudosiert.
Man erhielt 334,1 g des modifizierten Alkoholalkoxylats (i).
Das mittels Gelpermeationschromatographie nach DIN 55672 bestimmte gewichtsmittlere Molekulargewicht beträgt ca. 880 g/mol.

Referenzbeispiel 10: Pentanolgemisch + 7 BO + 12 EO (j)

Man legte 87,2 g Pentanolgemisch (ensprechend 1,0 mol) zusammen mit 2,23 g Kalium-tert-Butylat (Alkoxylierungskatalysator; entsprechend 0,2 Gew.-% bezogen auf den Gesamtansatz) in einem Autoklaven vor.

Bei 130°C gaste man zunächst 504,0 g 1,2-Butylenoxid (entsprechend 7,0 mol) und anschliessend 528,0 g Ethylenoxid (entsprechend 12,0 mol) ein.

Zur Vervollständigung der Umsetzung rührte man bei gleichzeitigem Abkühlen auf 80°C 30 Minuten nach.

Man erhielt 1116 g des Alkoholalkoxylats (j).

Das mittels Gelpermeationschromatographie nach DIN 55672 bestimmte gewichtsmittlere Molekulargewicht beträgt ca. 1120 g/mol.

Referenzbeispiel 11: 2-Propylheptanol + 3 BO + 12 EO (k)

Man legte 158,0 g 2-Propylheptanol (ensprechend 1,0 mol) zusammen mit 4,51 g Kalium-tert-Butylat (Alkoxylierungskatalysator; entsprechend 0,5 Gew.-% bezogen auf den Gesamtansatz) in einem Autoklaven vor.

Bei 130°C gaste man zunächst 216,0 g1,2-Butylenoxid (entsprechend 3,0 mol) und anschliessend 528,0 g Ethylenoxid (entsprechend 12,0 mol) ein.

Zur Vervollständigung der Umsetzung rührte man bei gleichzeitigem Abkühlen auf 80°C 30 Minuten nach.

Man erhielt 933,0 g des Alkoholalkoxylats (k).

Das mittels Gelpermeationschromatographie nach DIN 55672 bestimmte gewichtsmittlere Molekulargewicht beträgt ca. 900 g/mol.

Referenzbeispiel 12: 2-Propylheptanol + 7 BO + 12 EO (l)

Man legte 158,0 g 2-Propylheptanol (ensprechend 1,0 mol) zusammen mit 5,95 g Kalium-tert-Butylat (Alkoxylierungskatalysator; entsprechend 0,5 Gew.-% bezogen auf den Gesamtansatz) in einem Autoklaven vor.

Bei 130°C gaste man zunächst 504,0 g 1,2-Butylenoxid (entsprechend 7,0 mol) und anschliessend 528,0 g Ethylenoxid (entsprechend 12,0 mol) ein.

Zur Vervollständigung der Umsetzung rührte man bei gleichzeitigem Abkühlen auf 80°C 30 Minuten nach.

Man erhielt 1228,3 g des Alkoholalkoxylats (l).

Das mittels Gelpermeationschromatographie nach DIN 55672 bestimmte gewichtsmittlere Molekulargewicht beträgt ca. 1190 g/mol.

Referenzbeispiel 13: 2-Propylheptanol + 9 BO + 12 EO (m)

Man legte 94,8 g 2-Propylheptanol (entsprechend 0,6 mol) zusammen mit 3,2 g Kaliumhydroxid 50% ig in Wasser (Alkoxylierungskatalysator; entsprechend 0,2 Gew.-% bezogen auf den Gesamtansatz) in einem Autoklaven vor.

Man entwässerte 2 Stunden bei 90°C und ca. 20 mbar.

Bei 130°C gaste man zunächst 388,8 g 1,2-Butylenoxid (entsprechend 5,4 mol) und anschliessend 316,8 g Ethylenoxid (entsprechend 7,2 mol) ein.

Zur Vervollständigung der Umsetzung rührte man bei gleichzeitigem Abkühlen auf 80°C 30 Minuten nach.

Man erhielt 802,3 g des Alkoholalkoxylats (m).

Das mittels Gelpermeationschromatographie nach DIN 55672 bestimmte gewichtsmittlere Molekulargewicht beträgt ca. 1330 g/mol.

Referenzbeispiel 14: 2-Propylheptanol + 12 EO + 9 BO (n)

Man legte 94,8 g 2-Propylheptanol (entsprechend 0,6 mol) zusammen mit 3,2 g Kaliumhydroxid 50% ig in Wasser (Alkoxylierungskatalysator; entsprechend 0,2 Gew.-% bezogen auf den Gesamtansatz) in einem Autoklaven vor.

Man entwässerte 2 Stunden bei 90°C und ca. 20 mbar.

Bei 130°C gaste man zunächst 316,8 g Ethylenoxid (entsprechend 7,2 mol) und anschliessend 388,8 g 1,2-Butylenoxid (entsprechend 5,4 mol) ein.

Zur Vervollständigung der Umsetzung rührte man bei gleichzeitigem Abkühlen auf 80°C 30 Minuten nach.

Man erhielt 791,9 g des Alkoholalkoxylats (n).

Das mittels Gelpermeationschromatographie nach DIN 55672 bestimmte gewichtsmittlere Molekulargewicht beträgt ca. 1330 g/mol.

Referenzbeispiel 15: 2-Propylheptanol + 12 EO + 1 PeO (o)

Man legte 158,0 g 2-Propylheptanol (ensprechend 1,0 mol) zusammen mit 1,54 g Kalium-tert-Butylat (Alkoxylierungskatalysator; entsprechend 0,2 Gew.-% bezogen auf den Gesamtansatz) in einem Autoklaven vor.

Bei 130°C gaste man zunächst 528,0 g Ethylenoxid (entsprechend 12,0 mol) und anschliessend 86,0 g 1,2-Pentenoxid (entsprechend 1,0 mol) ein.
Zur Vervollständigung der Umsetzung rührte man bei gleichzeitigem Abkühlen auf 80°C 30 Minuten nach.
Man erhielt 784,7 g des Alkoholalkoxylats (o).
Das mittels Gelpermeationschromatographie nach DIN 55672 bestimmte gewichtsmittlere Molekulargewicht beträgt ca. 770 g/mol.

Referenzbeispiel 16: 2-Propylheptanol + 1 DeO + 12 EO (p)

Man legte 158,0 g 2-Propylheptanol (ensprechend 1,0 mol) zusammen mit 1,68 g Kalium-tert-Butylat (Alkoxylierungskatalysator; entsprechend 0,2 Gew.-% bezogen auf den Gesamtansatz) in einem Autoklaven vor.
Bei 130°C gaste man zunächst 156,3 g 1,2-Decenoxid (entsprechend 1,0 mol) und anschliessend 528,0 g Ethylenoxid (entsprechend 12,0 mol) ein.
Zur Vervollständigung der Umsetzung rührte man bei gleichzeitigem Abkühlen auf 80°C 30 Minuten nach.
Man erhielt 841,0 g des Alkoholalkoxylats (p).
Das mittels Gelpermeationschromatographie nach DIN 55672 bestimmte gewichtsmittlere Molekulargewicht beträgt ca. 840 g/mol.

Referenzbeispiel 17: 2-Propylheptanol + 12 EO + 1 DeO (q)

Man legte 158,0 g 2-Propylheptanol (ensprechend 1,0 mol) zusammen mit 1,68 g Kalium-tert-Butylat (Alkoxylierungskatalysator; entsprechend 0,2 Gew.-% bezogen auf den Gesamtansatz) in einem Autoklaven vor.
Bei 130°C gaste man zunächst 528,0 g Ethylenoxid (entsprechend 12,0 mol) und anschliessend 156,3 g 1,2-Decenoxid (entsprechend 1,0 mol) ein.
Zur Vervollständigung der Umsetzung rührte man bei gleichzeitigem Abkühlen auf 80°C 30 Minuten nach.
Man erhielt 827,1 g des Alkoholalkoxylats (q).
Das mittels Gelpermeationschromatographie nach DIN 55672 bestimmte gewichtsmittlere Molekulargewicht beträgt ca. 840 g/mol.

Referenzbeispiel 18: 2-Propylheptanol + 1 PeO + 12 EO (r)

Man legte 158,0 g 2-Propylheptanol (ensprechend 1,0 mol) zusammen mit 1,54 g Kalium-tert-Butylat (Alkoxylierungskatalysator; entsprechend 0,2 Gew.-% bezogen auf den Gesamtansatz) in einem Autoklaven vor.
Bei 130°C gaste man zunächst 86,0 g 1,2-Pentenoxid (entsprechend 1,0 mol) und anschliessend 528,0 g Ethylenoxid (entsprechend 12,0 mol) ein.
Zur Vervollständigung der Umsetzung rührte man bei gleichzeitigem Abkühlen auf 80°C 30 Minuten nach.
Man erhielt 770,9 g des Alkoholalkoxylats (r).
Das mittels Gelpermeationschromatographie nach DIN 55672 bestimmte gewichtsmittlere Molekulargewicht beträgt ca. 770 g/mol.

Referenzbeispiel 19: Stearylalkohol + 3 BO + 10,5 EO (s) (erfindungsgemäß)

Man legte 270,5 g Stearylalkohol (ensprechend 1,0 mol) zusammen mit 4,74 g Kalium-tert-Butylat (Alkoxylierungskatalysator; entsprechend 0,5 Gew.-% bezogen auf den Gesamtansatz) in einem Autoklaven vor.
Bei 130°C gaste man zunächst 216,0 g 1,2-Butylenoxid (entsprechend 3,0 mol) und anschliessend 462,0 g Ethylenoxid (entsprechend 10,5 mol) ein.
Zur Vervollständigung der Umsetzung rührte man bei gleichzeitigem Abkühlen auf 80°C 30 Minuten nach.
Man erhielt 968,8 g des Alkoholalkoxylats (s).
Das mittels Gelpermeationschromatographie nach DIN 55672 bestimmte gewichtsmittlere Molekulargewicht beträgt ca. 950 g/mol.

Referenzbeispiel 20: Stearylalkohol + 5 BO + 12 EO (t) (erfindungsgemäß)

Man legte 189,4 g Stearylalkohol (entsprechend 0,7 mol) zusammen mit 3,24 g Kaliumhydroxid 50% ig in Wasser (Alkoxylierungskatalysator; entsprechend 0,2 Gew.-% bezogen auf den Gesamtansatz) in einem Autoklaven vor. Man entwässerte 2 Stunden bei 90°C und ca. 20 mbar.
Bei 130°C gaste man zunächst 252,0 g 1,2-Butylenoxid (entsprechend 3,5 mol) und anschliessend 369,6 g Ethylenoxid (entsprechend 8,4 mol) ein.

Zur Vervollständigung der Umsetzung rührte man bei gleichzeitigem Abkühlen auf 80°C 30 Minuten nach.
Man erhielt 817,3 g des Alkoholalkoxylats (t).
Das mittels Gelpermeationschromatographie nach DIN 55672 bestimmte gewichtsmittlere Molekulargewicht beträgt ca. 1160 g/mol.

Beispiel 1: Fungizide Wirksamkeit

125 g/l Epoxiconazol wurden in einer Rührwerkskugelmühle (Dynomühle) zusammen mit jeweils 20 g/l Dispergiermittel (Atlas G 5000[1], Synperonic A[1]) sowie 50 g/l Propylenglykol im wässrigen Medium gemahlen bis eine Teilchengröße von 80 % < 2 μm erreicht wurde. Zu der Mischung kamen 3 g/l pro Liter Antischaummittel z.B. Rhodorsil 426[2], 3 g/l Verdicker, z.B. Rhodopol 23[2] sowie ein Biozid z.b. Acticide MBS[3]. Zu dieser Mischung wurde das jeweilige Adjuvans in wässriger Lösung oder in einem Lösungsmittel z.B. Solvesso dazugerührt, so dass die Endkonzentration der Formulierung aus 62.5 g/l Epoxiconazol und 125 g/l Adjuvans besteht.
[1]Uniquema/Croda
[2]Rhodia
[3]Thor Chemie

Biologische Prüfung (kurative Bekämpfung von Weizenbraunrost):

Blätter von in Töpfen gewachsenen Weizenkeimlingen der Sorte "Kanzler" wurden im Zweiblattstadium mit Sporen des Weizenbraunrostes "Puccinia recondita" bestäubt und 2 Tage im Gewächshaus bei hoher Luftfeuchtigkeit inkubiert. Dann wurden die Pflanzen in vollautomatischen Spritzkabinen mit den Formulierungen besprüht, welche die unten angegebenen Wirkstoffe und Adjuvantien enthielten. Die Spritzbrühen enthielten 50 ppm Epoxiconazol und 100 ppm Adjuvans. Das Verhältnis Wirkstoff zu Adjuvans betrug demnach 1:2. Nach dem Eintrocknen der Spritzbeläge wurden die Pflanzen ins Gewächshaus zurückgestellt und bei Temperaturen zwischen 20 und 24 °C sowie 60 bis 90 % relativer Luftfeuchtigkeit kultiviert. Nach 10 Tagen wurde das Ausmaß des Braunrostbefalls visuell als prozentualen Befall der gesamten Blattfläche ermittelt. Für jedes Versuchsglied wurden 3 Töpfe ausgewertet.

| Adjuvans [100 ppm] | Wirkstoff [50 ppm] | % Befall |
|---|---|---|
| (a) | Epoxiconazol | 3 |
| (b) | Epoxiconazol | 2 |
| (c) | Epoxiconazol | 1 |
| (d) | Epoxiconazol | 3 |
| (e) | Epoxiconazol | 5 |
| (f) | Epoxiconazol | 0 |
| (g) | Epoxiconazol | 4 |
| (h) | Epoxiconazol | 2 |
| (i) | Epoxiconazol | 2 |
| (j) | Epoxiconazol | 0 |
| (k) | Epoxiconazol | 1 |
| (l) | Epoxiconazol | 1 |
| (m) | Epoxiconazol | 2 |
| (n) | Epoxiconazol | 3 |
| (o) | Epoxiconazol | 2 |
| (p) | Epoxiconazol | 0 |
| (q) | Epoxiconazol | 2 |
| (r) | Epoxiconazol | 1 |
| (s) | Epoxiconazol | 0 |

(fortgesetzt)

| Adjuvans [100 ppm] | Wirkstoff [50 ppm] | % Befall |
|---|---|---|
| (t) | Epoxiconazol | 0 |
| Vergleich | Epoxiconazol | 7 |
| - | Epoxiconazol | 23 |
| - | - | 80 |
| (a) | 1-Heptanol + 3 BO + 5 EO (erfindungsgemäß) | |
| (b) | 1-Heptanol + 5 BO + 5 EO (erfindungsgemäß) | |
| (c) | 1-Heptanol + 7 BO + 5 EO (erfindungsgemäß) | |
| (d) | 1-Heptanol + 3 BO + 12 EO (erfindungsgemäß) | |
| (e) | 1-Heptanol + 9 BO + 5 EO (erfindungsgemäß) | |
| (f) | 1-Heptanol + 9 BO + 12 EO (erfindungsgemäß) | |
| (g) | 1-Heptanol + 12 EO + 9 BO (erfindungsgemäß) | |
| (h) | 1-Heptanol + 3 BO + 12 EO + 1 i-BO | |
| (i) | 1-Heptanol + 3 BO + 12 EO + DMS | |
| (j) | Pentanolgemisch + 7 BO + 12 EO (erfindungsgemäß) | |
| (k) | 2-Propylheptanol + 3 BO + 12 EO (erfindungsgemäß) | |
| (l) | 2-Propylheptanol + 7 BO + 12 EO (erfindungsgemäß) | |
| (m) | 2-Propylheptanol + 9 BO + 12 EO (erfindungsgemäß) | |
| (n) | 2-Propylheptanol + 12 EO + 9 BO (erfindungsgemäß) | |
| (0) | 2-Propylheptanol + 12 EO + 1 PeO | |
| (p) | 2-Propylheptanol + 1 DeO + 12 EO | |
| (q) | 2-Propylheptanol + 12 EO + 1 DeO | |
| (r) | 2-Propylheptanol + 1 PeO + 12 EO | |
| (s) | Stearylalkohol + 3 BO + 10,5 EO (erfindungsgemäß) | |
| (t) | Stearylalkohol + 5 BO + 12 EO (erfindungsgemäß) | |

## Patentansprüche

**1.** Mittel, umfassend

(a) wenigstens einen Wirkstoff zur Pflanzenbehandlung; und
(b) wenigstens einen alkoxylierten Alkohol der Formel (Ib)

$$R\text{-}O\text{-}(C_4H_8O)_x\text{-}[(C_2H_4O)_p\text{-}(C_3H_6O)_q]_{co}\text{-}H \qquad (Ib)$$

worin

R für einen aliphatischen linearen oder verzweigten Rest mit 1 bis 30 Kohlenstoffatomen steht;
x für einen Wert von 0 bis 100 steht;
x größer Null ist;

die Summe aus dem Wert von (4 · x) und der Anzahl der Kohlenstoffatome in R 15 bis 60 beträgt;

p für einen Wert von 0 bis 100 steht;

q für einen Wert von 0 bis 100 steht;

die Summe aus p und q größer Null ist, wobei der Rest $R-O-(C_4H_8O)_x-$ 2 bis 12 Verzweigungen insgesamt und 0,1 bis 0,3 Verzweigungen pro C-Atom aufweist.

**2.** Mittel nach Anspruch 1, **dadurch gekennzeichnet, dass** die Summe aus dem Wert (4 · x) und der Anzahl der Kohlenstoffatome in R 17 bis 50 oder 55, vorzugsweise 19 bis 46, beträgt.

**3.** Mittel nach Anspruch 1 oder 2, **dadurch gekennzeichnet, dass** der Rest $R-O-(C_4H_8O)_x-$ 0,13 bis 0,27, vorzugsweise 0,16 bis 0,25, Verzweigungen pro C-Atom aufweist.

**4.** Mittel nach einem der Ansprüche 1 bis 3, **dadurch gekennzeichnet, dass** der alkoxylierte Alkohol ein alkoxylierter Alkohol der Formel (Id)

$$R-O-(C_4H_8O)_x-(C_2H_4O)_p-H \qquad (Id)$$

ist, worin R, x, p wie in einem der Ansprüche 1 bis 3 definiert sind.

**5.** Verwendung eines in einem der Ansprüche 1 bis 4 definierten alkoxylierten Alkohols der Formel (Ib) als wirkungssteigerndes Adjuvans bei der Behandlung von Pflanzen.

**6.** Mittel, umfassend

(a) wenigstens einen Wirkstoff zur Pflanzenbehandlung; und
(b) wenigstens einen alkoxylierten Alkohol der Formel (IIb)

$$R-O-(C_{n1}H_{2n1}O)_o-[(C_2H_4O)_p-(C_3H_6O)_q]_{co}-(C_4H_8O)_x-H \qquad (IIb)$$

worin

R für einen aliphatischen linearen oder verzweigten Rest mit 1 bis 30 Kohlenstoffatomen steht;
n1 für 2 oder 3 steht;
o für 0, 1, 2 oder 3 steht;
x für einen Wert von 0 bis 100 steht;
x größer Null ist;

der Wert von (4 · x) 15 bis 60 beträgt;

p für einen Wert von 0 bis 100 steht;
q für einen Wert von 0 bis 100 steht;

die Summe aus p und q größer Null ist, wobei der Rest $-(C_4H_8O)_x-H$ 2 bis 12 Verzweigungen insgesamt und 0,1 bis 0,3 Verzweigungen pro C-Atom aufweist.

**7.** Mittel nach Anspruch 6, **dadurch gekennzeichnet, dass** der Wert von (4 · x) 15 bis 50 oder 55, vorzugsweise 19 bis 46, beträgt.

**8.** Mittel nach Anspruch 6 oder 7, **dadurch gekennzeichnet, dass** der Rest - $(C_4H_8O)_x-H$ 0,13 bis 0,27, vorzugsweise 0,16 bis 0,25, Verzweigungen pro C-Atom aufweist.

**9.** Mittel nach einem der Ansprüche 6 bis 8, **dadurch gekennzeichnet, dass** der alkoxylierte Alkohol ein alkoxylierter Alkohol der Formel (IId)

$$R-O-(C_{n1}H_{2n1}O)_o-(C_2H_4O)_p-(C_4H_8O)_x-H \qquad (IId)$$

ist, worin R, n1, o, x, p wie in einem der Ansprüche 6 bis 8 definiert sind.

**10.** Verwendung eines in einem der Ansprüche 6 bis 9 definierten alkoxylierten Alkohols der Formel (IIb) als wirkungssteigerndes Adjuvans bei der Behandlung von Pflanzen.

## Claims

**1.** A composition comprising

(a) at least one active ingredient for the treatment of plants; and
(b) at least one alkoxylated alcohol of the formula (Ib)

$$R\text{-}O\text{-}(C_4H_8O)_x\text{-}[(C_2H_4O)_p\text{-}(C_3H_6O)_q]_{co}\text{-}H \qquad \text{(Ib)}$$

in which

R is an aliphatic linear or branched radical having 1 to 30 carbon atoms;
x is a value from 0 to 100;
x is greater than zero;

the sum of the value of (4 · x) and the number of carbon atoms in R is 15 to 60;

p is a value from 0 to 100;
q is a value from 0 to 100;

the sum of p and q is greater than zero,
where the radical $R\text{-}O\text{-}(C_4H_8O)_x$- has 2 to 12 branches in total and 0.1 to 0.3 branches per carbon atom.

**2.** The composition according to Claim 1, wherein the sum of the value (4 · x) and the number of carbon atoms in R is 17 to 50 or 55, preferably 19 to 46.

**3.** The composition according to Claim 1 or 2, wherein the radical $R\text{-}O\text{-}(C_4H_8O)_x$- has 0.13 to 0.27, preferably 0.16 to 0.25, branches per carbon atom.

**4.** The composition according to one of Claims 1 to 3, wherein the alkoxylated alcohol is an alkoxylated alcohol of the formula (Id)

$$R\text{-}O\text{-}(C_4H_{8O})_x\text{-}(C_2H_4O)_p\text{-}H \qquad \text{(Id)}$$

in which R, x, p are as defined in one of Claims 1 to 3.

**5.** The use of an alkoxylated alcohol of the formula (Ib) defined in one of Claims 1 to 4 as effect-boosting adjuvant in the treatment of plants.

**6.** A composition comprising

(a) at least one active ingredient for the treatment of plants; and
(b) at least one alkoxylated alcohol of the formula (IIb)

$$R\text{-}O\text{-}(C_{n1}H_{2n1}O)_o\text{-}[(C_2H_4O)_p\text{-}(C_3H_6O)_q]_{co}\text{-}(C_4H_8O)_x\text{-}H \qquad \text{(IIb)}$$

in which

R is an aliphatic linear or branched radical having 1 to 30 carbon atoms;
n1 is 2 or 3;
o is 0, 1, 2 or 3;
x is a value from 0 to 100;
x is greater than zero;

the value of $(4 \cdot x)$ is 15 to 60;

p is a value from 0 to 100;
q is a value from 0 to 100;

the sum of p and q is greater than zero,
where the radical - $(C_4H_8O)_x$-H has 2 to 12 branches in total and 0.1 to 0.3 branches per carbon atom.

**7.** The composition according to Claim 6, wherein the value of $(4 \cdot x)$ is 15 to 50 or 55, preferably 19 to 46.

**8.** The composition according to Claim 6 or 7, wherein the radical $(C_4H_8O)_x$-H has 0.13 to 0.27, preferably 0.16 to 0.25, branches per carbon atom.

**9.** The composition according to one of Claims 6 to 8, wherein the alkoxylated alcohol is an alkoxylated alcohol of the formula (IId)

$$R\text{-}O\text{-}(C_{n1}H_{2n1}O)_o\text{-}(C_2H_4O)_p\text{-}(C_4H_8O)_x\text{-}H \qquad \text{(IId)}$$

in which R, n1, o, x, p are as defined in one of Claims 6 to 8.

**10.** The use of an alkoxylated alcohol of the formula (IIb) defined in one of Claims 6 to 9 as effect-boosting adjuvant in the treatment of plants.

## Revendications

**1.** Agent, comprenant

(a) au moins une substance active pour le traitement de plantes ; et
(b) au moins un alcool alcoxylé de formule (Ib)

$$R\text{-}O\text{-}(C_4H_8O)_x\text{-}[(C_2H_4O)_p\text{-}(C_3H_6O)q]_{co}\text{-}H \qquad \text{(Ib)}$$

où

R représente un radical aliphatique linéaire ou ramifié comprenant 1 à 30 atomes de carbone ;
x représente une valeur de 0 à 100 ;
x est supérieur à zéro ;

la somme de la valeur de $(4 \cdot x)$ et du nombre d'atomes de carbone dans R vaut 15 à 60 ;

p représente une valeur de 0 à 100 ;
q représente une valeur de 0 à 100 ;

la somme de p et q est supérieure à zéro,
le radical R-O-$(C_4H_8O)_x$- présentant 2 à 12 ramifications au total et 0,1 à 0,3 ramification par atome de carbone.

**2.** Agent selon la revendication 1, **caractérisé en ce que** la somme de la valeur de $(4 \cdot x)$ et du nombre d'atomes de carbone dans R vaut 17 à 50 ou 55, de préférence 19 à 46.

**3.** Agent selon la revendication 1 ou 2, **caractérisé en ce que** le radical R-O-$(C_4H_8O)_x$- présente 0,13 à 0,27, de préférence 0,16 à 0,25 ramification par atome de carbone.

**4.** Agent selon l'une quelconque des revendications 1 à 3, **caractérisé en ce que** l'alcool alcoxylé est un alcool alcoxylé de formule (Id)

$$R\text{-}O\text{-}(C_4H_8O)_x\text{-}(C_2H_4O)_p\text{-}H \qquad \text{(Id)}$$

dans laquelle R, x et p sont définis comme dans l'une quelconque des revendications 1 à 3.

**5.** Utilisation d'un alcool alcoxylé de formule (Ib) défini dans l'une quelconque des revendications 1 à 4 comme adjuvant augmentant l'action lors du traitement de plantes.

**6.** Agent, comprenant

(a) au moins une substance active pour le traitement de plantes ; et
(b) au moins un alcool alcoxylé de formule (IIb)

$$R\text{-}O\text{-}(C_{n1}H_{2n1}O)_o\text{-}[(C_2H_4O)_p\text{-}(C_3H_6O)_q]_{co}\text{-}(C_4H_8O)_x\text{-}H \quad \text{(IIb)}$$

où

R représente un radical aliphatique linéaire ou ramifié comprenant 1 à 30 atomes de carbone ;
n1 vaut 2 ou 3 ;
o vaut 0, 1, 2 ou 3 ;
x représente une valeur de 0 à 100 ;
x est supérieur à zéro ;

la valeur (4 · x) valant 15 à 60 ;

p représente une valeur de 0 à 100 ;
q représente une valeur de 0 à 100 ;

la somme de p et q est supérieure à zéro,
le radical $-(C_4H_8O)_x$-H présentant 2 à 12 ramifications au total et 0,1 à 0,3 ramification par atome de carbone.

**7.** Agent selon la revendication 6, **caractérisé en ce que** la valeur de (4 · x) vaut 15 à 50 ou 55, de préférence 19 à 46.

**8.** Agent selon la revendication 6 ou 7, **caractérisé en ce que** le radical $-(C_4H_8O)_x$-H présente 0,13 à 0,27, de préférence 0,16 à 0,25 ramification par atome de carbone.

**9.** Agent selon l'une quelconque des revendications 6 à 8, **caractérisé en ce que** l'alcool alcoxylé est un alcool alcoxylé de formule (IId)

$$R\text{-}O\text{-}(C_{n1}H_{2n1}O)_o\text{-}(C_2H_4O)_p\text{-}(C_4H_8O)_x\text{-}H \quad \text{(IId)}$$

dans laquelle R, n1, o, x et p sont définis comme dans l'une quelconque des revendications 6 à 8.

**10.** Utilisation d'un alcool alcoxylé de formule (IIb) défini dans l'une quelconque des revendications 6 à 9 comme adjuvant augmentant l'action lors du traitement de plantes.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 0042847 A
- WO 0177276 A
- US 2003092587 A
- DE 10017197
- WO 03090531 A
- US 2005170968 A
- WO 2005015998 A
- WO 0035278 A
- WO 2005084435 A
- US 2007281860 A
- JP 2002284608 A
- WO 0289579 A
- WO 0290320 A
- WO 0290321 A
- WO 0406677 A
- WO 0420399 A
- JP 2004099597 A
- JP 2006131529 A


### In der Beschreibung aufgeführte Nicht-Patentliteratur


- **BELLER et al.** *Journal of Molecular Catalysis A,* 1995, vol. 104, 17-85